# EUROPEAN PATENT APPLICATION

(11) **EP 4 607 897 A1**
(43) Date of publication of application: **27.08.2025**
(21) Application number: 23890329.8
(22) Date of filing: 25.08.2023
(51) Int. Cl.: H04L 67/60

(54) **DATA PROCESSING METHOD AND APPARATUS**

(30) Priority: 15.11.2022 CN 202211425454
(71) Applicant: Huawei Technologies Co., Ltd., Shenzhen, Guangdong 518129 (CN)
(72) Inventor: HAN, Zhaojiao, Shenzhen, Guangdong 518129 (CN); LIU, Xiaopeng, Shenzhen, Guangdong 518129 (CN); ZHANG, Xingping, Shenzhen, Guangdong 518129 (CN)
(74) Representative: MERH-IP Matias Erny Reichl Hoffmann Patentanwälte PartG mbB
(86) International application number: PCT/CN2023/114839
(87) International publication number: WO 2024/103891

(57) **Abstract**

Embodiments of this application disclose a data processing method and apparatus, to fully utilize computing resources and network resources of a transport network while ensuring a service requirement, so as to improve WR processing efficiency. The method includes: Before submitting a WR to the transport network, a sending node determines an order level of the WR based on the service requirement, adds a sending identifier to the WR based on the order level of the WR, and indicates, via the sending identifier, the transport network to process the WR based on the order level. Therefore, an optimal processing solution for the WR is provided while the service requirement and WR processing efficiency are balanced.

## Description

This application claims priority to Chinese Patent Application No. 202211425454.4, filed with the China National Intellectual Property Administration on November 15, 2022 and entitled "DATA PROCESSING METHOD AND APPARATUS", which is incorporated herein by reference in its entirety.

### TECHNICAL FIELD

This application relates to the field of communication, and in particular, to a data processing method and apparatus.

### BACKGROUND

Different nodes on a same host or different nodes on different hosts all exchange data over a transport network. The transport network includes, for example, a network interface card and communication links. To reduce node overheads, the transport network typically supports queue-based point-to-point communication. To be specific, when two nodes have data to be exchanged, the nodes only need to submit work requests (work request, WR) to a work queue (work queue, WQ) on the network interface card, to indicate the network interface card to perform data transmission operations indicated by the WR.

In some service scenarios, the transport network is required to perform order preserving on a plurality of WRs in a WQ, that is, a WR submitted earlier is processed first, and then a WR submitted later is processed. In this case, the transport network needs to exclusively perform the plurality of WRs. Consequently, this is not conducive to fully utilizing computing resources and network resources of the transport network, and it is difficult to improve WR processing efficiency.

### SUMMARY

This application provides a data processing method and apparatus, to fully utilize computing resources and network resources of a transport network while ensuring a service requirement, so as to improve WR processing efficiency.

According to a first aspect, this application provides a data processing method, applied to a communication system. The communication system includes a first node, a second node, and a transport network, where the transport network is used to forward data between the first node and the second node. The method includes: The transport network sequentially obtains a first work request WR and a second WR that are submitted by the first node, where the first WR and the second WR point to a first message and a second message respectively, the first message indicates to perform a first data transmission operation between the first node and the second node, the second message indicates to perform a second data transmission operation between the first node and the second node, the second WR carries a target sending identifier, and the target sending identifier indicates an order in which the transport network processes the first WR and the second WR; and the transport network processes the first WR and the second WR in the order indicated by the target sending identifier.

The transport network can identify an order level (that is, an order of processing a current WR and a previous WR) indicated by the target sending identifier. Therefore, this helps a user (for example, the first node) add a sending identifier representing a corresponding order level to the WR to meet a service requirement of the user for the order level. This helps optimize a WR processing solution while balancing a service requirement and WR processing efficiency.

It is assumed that in a process in which the transport network processes the first WR and the second WR in the order indicated by the target sending identifier, the transport network performs the first data transmission operation and the second data transmission operation in a first order, and the transport network reports a completion status of the first data transmission operation and a completion status of the second data transmission operation in a second order.

Optionally, the first order is the order indicated by the target sending identifier, and/or the second order is the order indicated by the target sending identifier.

When the target sending identifier indicates the first order and the second order, the first order is not limited to being the same as the second order in this application. In some examples, the first order and the second order that are indicated by the target sending identifier may be the same or different.

In this way, the target sending identifier may be used to control one or more WR processing sub-procedures. This helps balance the service requirement and WR processing efficiency at a finer granularity, to further optimize a WR processing solution.

Optionally, the transport network includes a first network interface card connected to the first node and a second network interface card connected to the second node. In this way, the transport network can not only support order level customization in communication between different components on a single host, but also support order level customization in communication between different hosts.

Optionally, the first order includes a requester execution order and a responder execution order. In a process in which the transport network performs the first data transmission operation and the second data transmission operation in the first order, the first network interface card sends a first packet and a second packet to the second network interface card in the requester execution order, where the first packet carries the first message, and the second packet carries the second message; and the second network interface card performs the first data transmission operation and the second data transmission operation in the responder execution order.

Optionally, the requester execution order is the order indicated by the target sending identifier, and/or the responder execution order is an order indicated by a target receiving identifier encapsulated by the first network interface card into the second packet based on the target sending identifier. When the responder execution order is the order indicated by the target receiving identifier, and the requester execution order is the order indicated by the target sending identifier, the responder execution order and the requester execution order may be the same, or may be different.

The target receiving identifier is encapsulated into the second packet by the first network interface card based on the target sending identifier. Therefore, this is equivalent to a case in which the target sending identifier indicates an order in which the second network interface card performs the data transmission operations. The target sending identifier may be used in a process in which a requester and/or a responder perform/performs a data transmission operation. This helps balance the service requirement and WR processing efficiency at the finer granularity, to further optimize the WR processing solution.

Optionally, the second order includes a requester completion order and a responder completion order. In a process in which the transport network reports the completion status of the first data transmission operation and the completion status of the second data transmission operation in the second order, the second network interface card reports the completion status of the first data transmission operation and the completion status of the second data transmission operation to the second node in the responder completion order, and the first network interface card reports the completion status of the first data transmission operation and the completion status of the second data transmission operation to the first node in the requester completion order.

Optionally, the requester completion order is the order indicated by the target sending identifier, and/or the responder completion order is the order indicated by the target receiving identifier encapsulated by the first network interface card into the second packet based on the target sending identifier. When the responder completion order is the order indicated by the target receiving identifier, and the requester completion order is the order indicated by the target sending identifier, the responder completion order and the requester completion order may be the same, or may be different.

The target receiving identifier is encapsulated into the second packet by the first network interface card based on the target sending identifier. Therefore, this is equivalent to a case in which the target sending identifier indicates an order in which the second network interface card reports the completion statuses. The target sending identifier may be used in a process in which the requester and/or the responder report/reports the completion status. This helps balance the service requirement and WR processing efficiency at the finer granularity, to further optimize the WR processing solution.

According to a second aspect, this application provides a data processing method, applied to a communication system. The communication system includes a first node, a second node, and a transport network, where the transport network is used to forward data between the first node and the second node. The method includes: The first node sequentially submits a first work request WR and a second WR to the transport network, where the first WR and the second WR point to a first message and a second message respectively, the first message indicates to perform a first data transmission operation between the first node and the second node, the second message indicates to perform a second data transmission operation between the first node and the second node, the second WR carries a target sending identifier, and the target sending identifier indicates an order in which the transport network processes the first WR and the second WR.

Optionally, it is assumed that in a process in which the transport network processes the first WR and the second WR in the order indicated by the target sending identifier, the transport network performs the first data transmission operation and the second data transmission operation in a first order, and the transport network reports a completion status of the first data transmission operation and a completion status of the second data transmission operation in a second order.

Optionally, the target sending identifier indicates the first order and/or the second order.

Optionally, the transport network includes a first network interface card connected to the first node and a second network interface card connected to the second node.

The first order includes a requester execution order and a responder execution order. In a process in which the transport network performs the first data transmission operation and the second data transmission operation in the first order, the first network interface card sends a first packet and a second packet to the second network interface card in the requester execution order, where the first packet carries the first message, and the second packet carries the second message; and the second network interface card performs the first data transmission operation and the second data transmission operation in the responder execution order.

Optionally, the target sending identifier indicates the requester execution order, and/or indicates the first network interface card to encapsulate a target receiving identifier into the second packet carrying the second message, where the target receiving identifier indicates the responder execution order.

Optionally, the second order includes a requester completion order and a responder completion order. In a process in which the transport network reports the completion status of the first data transmission operation and the completion status of the second data transmission operation in the second order, the second network interface card reports the completion status of the first data transmission operation and the completion status of the second data transmission operation to the second node in the responder completion order, and the first network interface card reports the completion status of the first data transmission operation and the completion status of the second data transmission operation to the first node in the requester completion order.

Optionally, the target sending identifier indicates the requester execution order, and/or indicates the first network interface card to encapsulate the target receiving identifier into the second packet carrying the second message, where the target receiving identifier indicates the responder completion order.

According to a third aspect, this application provides a data processing method, applied to a communication system. The communication system includes a first node, a second node, and a transport network, where the transport network is used to forward data between the first node and the second node. The method includes: The first node sequentially submits a first work request WR and a second WR to the transport network, where the first WR and the second WR point to a first message and a second message respectively, the first message indicates to perform a first data transmission operation between the first node and the second node, the second message indicates to perform a second data transmission operation between the first node and the second node, the second WR carries a target sending identifier, and the target sending identifier indicates an order in which the transport network processes the first WR and the second WR; and the transport network processes the first WR and the second WR in the order indicated by the target sending identifier.

It is assumed that in a process in which the transport network processes the first WR and the second WR in the order indicated by the target sending identifier, the transport network performs the first data transmission operation and the second data transmission operation in a first order, and the transport network reports a completion status of the first data transmission operation and a completion status of the second data transmission operation in a second order.

Optionally, the first order is the order indicated by the target sending identifier, and/or the second order is the order indicated by the target sending identifier.

When the target sending identifier indicates the first order and the second order, in this application, the first order is not limited to being the same as the second order. In some examples, the first order and the second order that are indicated by the target sending identifier may be the same or different.

Optionally, the transport network includes a first network interface card connected to the first node and a second network interface card connected to the second node.

Optionally, the first order includes a requester execution order and a responder execution order. In a process in which the transport network performs the first data transmission operation and the second data transmission operation in the first order, the first network interface card sends a first packet and a second packet to the second network interface card in the requester execution order, where the first packet carries the first message, and the second packet carries the second message; and the second network interface card performs the first data transmission operation and the second data transmission operation in the responder execution order.

Optionally, the requester execution order is the order indicated by the target sending identifier, and/or the responder execution order is an order indicated by a target receiving identifier encapsulated by the first network interface card into the second packet based on the target sending identifier. When the responder execution order is the order indicated by the target receiving identifier, and the requester execution order is the order indicated by the target sending identifier, the responder execution order and the requester execution order may be the same, or may be different.

Optionally, the second order includes a requester completion order and a responder completion order. In a process in which the transport network reports the completion status of the first data transmission operation and the completion status of the second data transmission operation in the second order, the second network interface card reports the completion status of the first data transmission operation and the completion status of the second data transmission operation to the second node in the responder completion order, and the first network interface card reports the completion status of the first data transmission operation and the completion status of the second data transmission operation to the first node in the requester completion order.

Optionally, the requester completion order is the order indicated by the target sending identifier, and/or the responder completion order is the order indicated by the target receiving identifier encapsulated by the first network interface card into the second packet based on the target sending identifier. When the responder completion order is the order indicated by the target receiving identifier, and the requester completion order is the order indicated by the target sending identifier, the responder completion order and the requester completion order may be the same, or may be different.

According to a fourth aspect, this application provides a data processing method, applied to a communication system. The communication system includes a first node, a second node, and a transport network, where the transport network is used to forward data between the first node and the second node, and the transport network includes a first network interface card connected to the first node and a second network interface card connected to the second node. The method includes: The first network interface card sequentially obtains a first work request WR and a second WR that are submitted by the first node, where the first WR and the second WR point to a first message and a second message respectively, the first message indicates to perform a first data transmission operation between the first node and the second node, the second message indicates to perform a second data transmission operation between the first node and the second node, the second WR carries a target sending identifier, and the target sending identifier indicates an order in which the transport network processes the first WR and the second WR; and the first network interface card processes the first WR and the second WR in the order indicated by the target sending identifier.

Optionally, that the first network interface card processes the first WR and the second WR in the order indicated by the target sending identifier includes: The first network interface card sends a first packet and a second packet to the second network interface card in the order indicated by the target sending identifier, where the first packet carries the first message, and the second packet carries the second message; and/or the first network interface card sends the second packet including a target receiving identifier, where the target receiving identifier indicates an order in which the second network interface card performs the first data transmission operation and the second data transmission operation.

Optionally, that the first network interface card processes the first WR and the second WR in the order indicated by the target sending identifier includes: The first network interface card reports a completion status of the first data transmission operation and a completion status of the second data transmission operation to the first node in the order indicated by the target sending identifier; and/or the first network interface card sends the second packet including the target receiving identifier, where the target receiving identifier indicates the second network interface card to report the completion status of the first data transmission operation and the completion status of the second data transmission operation to the second node in the order indicated by the target sending identifier.

According to a fifth aspect, this application provides a data processing method, applied to a communication system. The communication system includes a first node, a second node, and a transport network, where the transport network is used to forward data between the first node and the second node, and the transport network includes a first network interface card and a second network interface card. The method includes: The second network interface card separately receives a first packet and a second packet that are sent by the first network interface card, where the first packet carries a first message to which a first work request WR points, the second packet carries a second message to which a second WR points, the first WR and the second WR are sequentially submitted by the first node, the first message indicates to perform a first data transmission operation between the first node and the second node, the second message indicates to perform a second data transmission operation between the first node and the second node, the second packet carries a target receiving identifier, and the target receiving identifier indicates an order in which the transport network processes the first WR and the second WR; and the second network interface card processes the first message and the second message in the order indicated by the target receiving identifier.

Optionally, the second network interface card performs the first data transmission operation and the second data transmission operation in the order indicated by the target receiving identifier, and/or the second network interface card reports a completion status of the first data transmission operation and a completion status of the second data transmission operation to the second node in the order indicated by the target receiving identifier.

According to a sixth aspect, this application provides a data processing apparatus, including: an obtaining module, configured to sequentially obtain a first work request WR and a second WR that are submitted by a first node, where the first WR and the second WR point to a first message and a second message respectively, the first message indicates to perform a first data transmission operation between the first node and a second node, the second message indicates to perform a second data transmission operation between the first node and the second node, the second WR carries a target sending identifier, and the target sending identifier indicates an order in which the transport network processes the first WR and the second WR; and a processing module, configured to process the first WR and the second WR in the order indicated by the target sending identifier.

Optionally, the processing module is specifically configured to: perform the first data transmission operation and the second data transmission operation in a first order; and report a completion status of the first data transmission operation and a completion status of the second data transmission operation in a second order, where the first order is the order indicated by the target sending identifier, and/or the second order is the order indicated by the target sending identifier.

Optionally, the processing apparatus includes a first network interface card connected to the first node and a second network interface card connected to the second node. The first order includes a requester execution order and a responder execution order.

Optionally, the first network interface card is configured to send a first packet and a second packet to the second network interface card in the requester execution order, where the first packet carries the first message, and the second packet carries the second message. The second network interface card is configured to perform the first data transmission operation and the second data transmission operation in the responder execution order.

Optionally, the second order includes a requester completion order and a responder completion order. The second network interface card is configured to report the completion status of the first data transmission operation and the completion status of the second data transmission operation to the second node in the responder completion order. The first network interface card is configured to report the completion status of the first data transmission operation and the completion status of the second data transmission operation to the first node in the requester completion order. The requester completion order is the order indicated by the target sending identifier, and/or the responder completion order is an order indicated by a target receiving identifier encapsulated by the first network interface card into the second packet based on the target sending identifier.

According to a seventh aspect, this application provides a data processing apparatus, including an interaction module, configured to sequentially submit a first work request WR and a second WR to a transport network, where the first WR and the second WR point to a first message and a second message respectively, the first message indicates to perform a first data transmission operation between the data processing apparatus and a second node, the second message indicates to perform a second data transmission operation between the data processing apparatus and the second node, the second WR carries a target sending identifier, and the target sending identifier indicates an order in which the transport network processes the first WR and the second WR.

Optionally, it is assumed that in a process in which the transport network processes the first WR and the second WR in the order indicated by the target sending identifier, the transport network performs the first data transmission operation and the second data transmission operation in a first order, and the transport network reports a completion status of the first data transmission operation and a completion status of the second data transmission operation in a second order.

Optionally, the target sending identifier indicates the first order and/or the second order.

Optionally, the transport network includes a first network interface card connected to the first node and a second network interface card connected to the second node.

The first order includes a requester execution order and a responder execution order. In a process in which the transport network performs the first data transmission operation and the second data transmission operation in the first order, the first network interface card sends a first packet and a second packet to the second network interface card in the requester execution order, where the first packet carries the first message, and the second packet carries the second message; and the second network interface card performs the first data transmission operation and the second data transmission operation in the responder execution order.

Optionally, the target sending identifier indicates the requester execution order, and/or indicates the first network interface card to encapsulate a target receiving identifier into the second packet carrying the second message, where the target receiving identifier indicates the responder execution order.

Optionally, the second order includes a requester completion order and a responder completion order. In a process in which the transport network reports the completion status of the first data transmission operation and the completion status of the second data transmission operation in the second order, the second network interface card reports the completion status of the first data transmission operation and the completion status of the second data transmission operation to the second node in the responder completion order, and the first network interface card reports the completion status of the first data transmission operation and the completion status of the second data transmission operation to the first node in the requester completion order.

Optionally, the target sending identifier indicates the requester execution order, and/or indicates the first network interface card to encapsulate the target receiving identifier into the second packet carrying the second message, where the target receiving identifier indicates the responder completion order.

According to an eighth aspect, this application provides a data processing apparatus. The data processing apparatus is disposed in a first node, and the data processing apparatus includes: an obtaining module, configured to sequentially obtain a first work request WR and a second WR that are submitted by the first node, where the first WR and the second WR point to a first message and a second message respectively, the first message indicates to perform a first data transmission operation between the first node and a second node, the second message indicates to perform a second data transmission operation between the first node and the second node, the second WR carries a target sending identifier, the target sending identifier indicates an order in which a transport network processes the first WR and the second WR, and the transport network includes the data processing apparatus and a second network interface card disposed in the second node; and a processing module, configured to process the first WR and the second WR in the order indicated by the target sending identifier.

Optionally, the processing module is configured to send a first packet and a second packet to the second network interface card in the order indicated by the target sending identifier, where the first packet carries the first message, and the second packet carries the second message; and/or the first network interface card sends the second packet including a target receiving identifier, where the target receiving identifier indicates an order in which the second network interface card performs the first data transmission operation and the second data transmission operation.

Optionally, the processing module is configured to: report a completion status of the first data transmission operation and a completion status of the second data transmission operation to the first node in the order indicated by the target sending identifier; and/or send the second packet including the target receiving identifier, where the target receiving identifier indicates the second network interface card to report the completion status of the first data transmission operation and the completion status of the second data transmission operation to the second node in the order indicated by the target sending identifier.

According to a ninth aspect, this application provides a data processing apparatus. The data processing apparatus is disposed in a second node, and the data processing apparatus includes: a receiving module, configured to separately receive a first packet and a second packet that are sent by a first network interface card, where the first network interface card is disposed in a first node, the first packet carries a first message to which a first work request WR points, the second packet carries a second message to which a second WR points, the first WR and the second WR are sequentially submitted by the first node, the first message indicates to perform a first data transmission operation between the first node and the second node, the second message indicates to perform a second data transmission operation between the first node and the second node, the second packet carries a target receiving identifier, and the target receiving identifier indicates "an order in which the data processing apparatus processes the first WR and the second WR; and a processing module, configured to process the first message and the second message in the order indicated by the target receiving identifier.

Optionally, the processing module is configured to: perform the first data transmission operation and the second data transmission operation in the order indicated by the target receiving identifier; and/or report a completion status of the first data transmission operation and a completion status of the second data transmission operation to the second node in the order indicated by the target receiving identifier.

According to a tenth aspect, this application provides a communication system, including the data processing apparatus according to the sixth aspect and the data processing apparatus according to the seventh aspect, or including the data processing apparatus according to the eighth aspect and the data processing apparatus according to the ninth aspect.

According to an eleventh aspect, this application provides a computing device, including a memory and a processor. The memory stores code, the processor is configured to execute the code, and when the code is executed, the computing device can perform the method described in any one of the first aspect to the fifth aspect or any possible implementation of any one of the first aspect to the fifth aspect.

According to a twelfth aspect, this application provides a computer storage medium. The computer storage medium stores a computer program, and when the program is executed by a computer, the computer is enabled to perform the method described in any one of the first aspect to the fifth aspect or any possible implementation of any one of the first aspect to the fifth aspect.

The apparatuses provided in this application may be configured to perform the foregoing corresponding methods. Therefore, for technical effects that can be achieved by the apparatuses in this application, refer to the technical effects achieved by the foregoing corresponding methods. Details are not described herein again.

### BRIEF DESCRIPTION OF DRAWINGS

FIG. 1 schematically shows a possible structure of a communication system;
FIG. 2 schematically shows a possible structure of a computing device;
FIG. 3 schematically shows a possible procedure in which a host 1 sends a message to a host 2;
FIG. 4 is a possible diagram of a data processing method;
FIG. 5 schematically shows another possible procedure of a data processing method according to this application;
FIG. 6 schematically shows another possible procedure of a data processing method according to this application;
FIG. 7 schematically shows a possible procedure of processing a plurality of WRs by a transport network according to this application;
FIG. 8 schematically shows another possible procedure of a data processing method according to this application;
FIG. 9 schematically shows processing sub-procedures that are indicated by order identifiers and in which order control is required according to this application;
FIG. 10 schematically shows a process in which a host 1 submits a WR;
FIG. 11 schematically shows a possible form of a configuration interface for configuring a preset rule;
FIG. 12 schematically shows another possible procedure of a data processing method according to this application; and
FIG. 13 to FIG. 16 schematically show possible structures of data processing apparatuses according to this application.

### DESCRIPTION OF EMBODIMENTS

The following first describes an application scenario of this application by using an example.

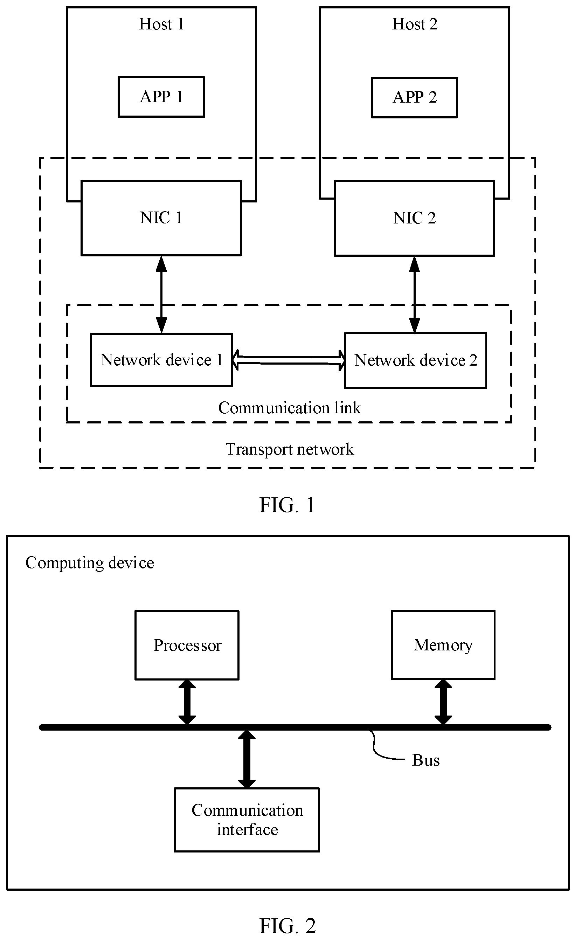

FIG. 1 schematically shows a communication system. Refer to FIG. 1. The communication system includes a host 1, a host 2, and a transport network. The transport network is used to transmit data of the host 1 to the host 2, or is used to transmit data of the host 2 to the host 1.

Refer to FIG. 1. The transport network may forward data between the host 1 and the host 2 based on a network transmission protocol. The transport network includes a network adapter or a network interface card (network interface card, NIC) 1 disposed on the host 1 and a network interface card or a NIC 2 disposed on the host 2. A communication link is established between the NIC 1 and the NIC 2. The NIC 1 sends the data of the host 1 to the NIC 2 through the communication link, and the NIC 2 sends the data to the host 2. Alternatively, the NIC 2 sends the data of the host 2 to the NIC 1 through the communication link, and the NIC 1 sends the data to the host 1. The communication link may be a wired link or a wireless link. Optionally, the communication link may include one or more network devices, and the one or more network devices may include at least one of the following: a hub, a gateway, and a router. FIG. 1 schematically shows two network devices (a network device 1 and a network device 2) over the communication link.

It should be noted that the communication system shown in FIG. 1 may include more settings. For example, the communication system may include more hosts, and the host 1 and the host 2 may be any two hosts in the communication system.

Optionally, the device shown in FIG. 1 may be a physical device or a virtual device running on a physical device. For example, the host 1 and the host 2 may be physical devices or virtual devices running on a physical device, and the NIC 1 and the NIC 2 may be physical devices or virtual devices running on a physical device.

The physical device may be a computing device. FIG. 2 schematically shows a possible structure of the computing device. Refer to FIG. 2. The computing device may include a processor, a communication interface, and a memory. The processor, the communication interface, and the memory are connected to each other through an internal bus. The processor may include one or more general-purpose processors, for example, a central processing unit (central processing unit, CPU), or a combination of a CPU and a hardware chip.

The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The memory may include a volatile memory (volatile memory), for example, a random access memory (random access memory, RAM). The memory may alternatively include a non-volatile memory (non-volatile memory), for example, a read-only memory (read-only memory, ROM), a flash memory (flash memory), a hard disk drive (hard disk drive, HDD), a solid-state drive (solid-state drive, SSD), or a double data rate synchronous dynamic random access memory (Double Data Rate Synchronous Dynamic Random Access Memory, DDR SDRAM). The memory may further include a combination of the foregoing types. The DDR SDRAM may be referred to as DDR for short. The memory may be used as an internal memory or a cache of the computing device. The cache may be a first-level or multi-level cache, for example, may be implemented via a register and/or a static random access memory (static random access memory, SRAM).

The processor may implement functions of the NIC 1 or the NIC 2 by executing code in the memory. Alternatively, the memory may store code of a system application and/or an application process, and the processor may implement functions of a CPU core and/or a process of the host 1 or the host 2 by executing the code. For example, a CPU in the host 1 may run an application program (application program, APP) 1 by executing instructions in the memory. Similarly, a CPU in the host 2 may run an APP 2 by executing instructions in the memory. The message generated by the host described above may mean that an APP running on the host generates the message, and the message received by the host may mean that an APP running on the host receives the message.

A data transmission channel (channel) and a corresponding work queue (work queue, WQ) may be created for the host 1 and the host 2 between the NIC 1 and the NIC 2. In some examples, the WQ may be a queue pair (queue pair, QP). Then, the NIC 1 and the NIC 2 may exchange data between the host 1 and the host 2 through the data transmission channel based on the WQ. Specifically, the host 1 may submit a work request (work request, WR) to the WQ, and a data transmission message to which the WR points indicates to perform a data transmission operation between the host 1 and the host 2. In a process of processing a WR, a transport network performs a corresponding data transmission operation (WR execution for short), and notifies a host (for example, including the host 1 and/or the host 2) of a completion status of the data transmission operation (or WR) (WR completion for short). In other words, that the transport network processes the WR includes that the transport network executes the WR and completes the WR.

An example in which the transport network includes the NIC 1 and the NIC 2 is used. That the transport network processes the WR includes that the NIC 1 processes the WR and that the NIC 2 processes the WR. That any NIC processes the WR includes that the NIC executes the WR and that the NIC completes the WR.

Optionally, the NIC 1 may create a completion queue (complete queue, CQ) for the host 1 and the NIC 2 may create a completion queue for the host 2. The host is notified of the completion status of the WR by submitting a completion queue element (CQ element, CQE) to the CQ.

A type of a data transmission operation (operation for short) indicated by the message is not limited in this application. For example, the operation may be a write (write) operation, a read (read) operation, a send (send) operation, or an atomic (atomic) operation.

In some examples, the message may be a remote direct memory access (remote direct memory access, RDMA) message, and correspondingly the NIC may be an RDMA NIC (RNIC for short).

In this application, an example in which the host 1 is a requester and the host 2 is a responder is used. In some examples, the host 2 may alternatively be used as a requester, and the host1 may alternatively be used as a responder. The following describes a process of exchanging the data between the host 1 and the host 2 still by using an example in which the host 1 and the host 2 are respectively a requester and a responder.

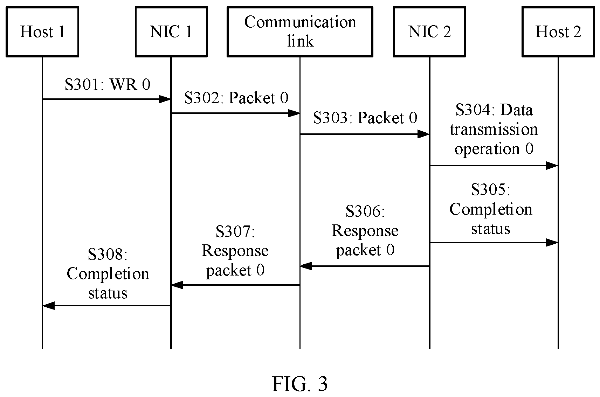

FIG. 3 schematically shows a possible procedure in which a host 1 sends a message to a host 2. Refer to FIG. 3. The procedure may include steps S301 to S308.

S301: The host 1 submits a WR 0 to a NIC 1.

The NIC 1 may create a WQ for the host 1, and the host 1 may submit the WR 0 to the WQ. It is assumed that a message 0 to which the WR 0 points indicates to perform a data transmission operation 0 between the host 1 and the host 2.

A quantity of WQs created by the NIC 1 for the host 1 is not limited in this application. In some examples, the NIC 1 creates different WQs for different processes in the host 1. The process may be an application process or a system process.

A specific manner in which the host 1 submits the WR 0 to the WQ is not limited in this application. In some examples, the application process submits, via communication middleware, the WR 0 to a WQ created by the NIC 1 for the application process.

After the host 1 submits the WR 0 to the WQ, a transport network may process the WR 0 according to a procedure of the following steps S302 to S308.

S302: The NIC 1 sends a packet 0 to a communication link.

The NIC 1 may read the WR 0 from the WQ, obtain the message 0 to which the WR 0 points, and then perform the data transmission operation 0. Optionally, that the NIC 1 performs the data transmission operation 0 may include: The NIC 1 encapsulates the message 0 into the packet 0, and sends the packet 0 to the communication link.

In some examples, the NIC 1 divides the message 0 into a plurality of fragmented messages (fragments for short), encapsulates each fragment into a packet (referred to as a fragmented packet), and then sends a plurality of fragmented packets.

S303: The communication link forwards the packet 0 to a NIC 2.

S304: The NIC 2 performs the data transmission operation 0.

After receiving the packet 0, the NIC 2 may obtain the message 0 carried in the packet 0, and perform the data transmission operation 0 indicated by the message 0. An example in which the message 0 is a write message is used. That the NIC 2 performs the data transmission operation 0 may include: The NIC 2 writes data in the message 0 into the host 2. An example in which the message 0 is a read message is used. That the NIC 2 performs the data transmission operation 0 may include: The NIC 2 obtains data indicated by the message 0 from the host 2, and then sends the obtained data to the host 1 via the NIC 1.

S305: The NIC 2 reports a completion status of the data transmission operation 0 to the host 2.

After performing the data transmission operation 0, the NIC 2 may report the completion status of the data transmission operation 0. Optionally, the NIC 2 reports the completion status of the data transmission operation 0 by submitting a CQE to a CQ of the host 2. The completion status indicated by the CQE may indicate success or failure of the data transmission operation 0. For example, the completion status indicates that the host 2 has successfully received the message 0, has successfully written the message 0 into the host 2, has not received the message 0, or fails to write the message 0.

A quantity of CQs created by the NIC 2 for the host 2 is not limited in this application. In some examples, the NIC 2 creates different CQs for different processes in the host 2. The process may be an application process or a system process.

A specific manner in which the NIC 2 submits the CQE to the CQ is not limited in this application. In some examples, the NIC 2 submits the CQE to a CQ of a process in the host 2.

S306: The NIC 2 sends a response packet 0 to the NIC 1.

After S304 or S305, the NIC 2 may send the response packet 0 to the NIC 1. The response packet 0 indicates the completion status of the data transmission operation 0. The completion status may indicate success or failure of the data transmission operation 0. For example, the completion status indicates that the host 2 has successfully received the message 0, has successfully written the message 0 into the host 2, has not received the message 0, or fails to write the message 0.

S307: The communication link forwards the response packet 0 to the NIC 1.

S308: The NIC 1 reports the completion status of the data transmission operation 0 to the host 1.

After receiving the response packet 0, the NIC 1 may report the completion status of the data transmission operation 0 to the host 1 based on the response packet 0. Optionally, the NIC 1 reports the completion status of the data transmission operation 0 by submitting a CQE to a CQ of the host 1. The completion status indicated by the CQE may indicate success or failure of the data transmission operation 0. For example, the completion status indicates that the host 2 has successfully received the message 0, has successfully written the message 0 into the host 2, the host 2 has not received the message 0, or the message 0 fails to be written.

A quantity of CQs created by the NIC 1 for the host 1 is not limited in this application. In some examples, the NIC 1 creates different CQs for different processes in the host 1. The process may be an application process or a system process.

A specific manner in which the NIC 1 submits the CQE to the CQ is not limited in this application. In some examples, the NIC 1 submits the CQE to a CQ of a process in the host 1.

It should be noted that steps S306 and S307 are optional steps. For example, when the NIC 1 does not receive the response packet 0 within preset duration, the NIC 1 may report failure of the data transmission operation 0 to the host 1.

Generally, the host 1 needs to sequentially submit a plurality of WRs to the WQ. The transport network may process each WR according to the procedure of S302 to S308. Service requirements in some service scenarios require the transport network to perform order preserving on the plurality of WRs submitted by the host 1. Therefore, the transport network needs to ensure that a WR submitted earlier is processed first, and then a WR submitted later is processed.

It is assumed that the host 1 sequentially submits a WR 1 and a WR 2 to the WR, the WR 1 and the WR 2 respectively point to a message 1 and a message 2, and the message 1 and the message 2 respectively indicate to perform a data transmission operation 1 and a data transmission operation 2 between the host 1 and the host 2. In this case, in step S302, the NIC 1 needs to sequentially perform the data transmission operation 1 and the data transmission operation 2. In step S303, the communication link needs to sequentially forward a packet 1 and a packet 2 to the NIC 2 according to a first-send first-arrive principle. In S304, the NIC 2 needs to perform the data transmission operation 1 and the data transmission operation 2 in an order of packet order identifiers in the packets. In S305, the NIC 2 sequentially reports a completion status of the data transmission operation 1 and a completion status of the data transmission operation 2. In S308, the NIC 1 sequentially reports the completion status of the data transmission operation 1 and the completion status of the data transmission operation 2.

Optionally, the packet order identifier may be a data packet sequence number (packet sequence number, PSN). In some examples, the NIC 2 may detect a packet loss status based on the PSN. When detecting a packet loss, the NIC 2 may retransmit all lost packets and subsequent packets, to ensure that all the packets are received in an order of PSNs in the packets. When the NIC 2 does not detect a packet loss, the NIC 2 may send packets in an order (for example, ascending order) of PSNs.

In some service scenarios, for example, in an accumulation/summation service scenario in which order is not involved, the transport network is not required to perform order preserving on a plurality of WRs for service requirements in such a service scenario. To implement order preserving on the plurality of WRs, the NIC 1 needs to exclusively perform S302 and S308 for the plurality of WRs, and the NIC 2 needs to exclusively perform S304 to S306 for the plurality of WRs. As a result, processing efficiency is low. In addition, to ensure first-send first-arrive for a packet, it is difficult to fully utilize network bandwidth over the communication link, which is unfavorable to reduce a transmission delay of the packet.

To resolve the foregoing problem, this application provides a data processing method. An idea of the solution is as follows: Before submitting a WR 2, a host 1 determines an order requirement of the WR 2 based on a service requirement, adds a corresponding sending identifier to the submitted WR 2 based on the order requirement of the WR 2, and indicates, via the sending identifier, a transport network to process the WR 2 based on the order requirement. Optionally, a user may preconfigure a plurality of types of order requirements, and associate each order requirement with a sending identifier, to obtain a sending identifier set. Correspondingly, the host 1 may select the associated sending identifier from the sending identifier set based on the order requirement of the WR 2, and add the associated sending identifier to the WR 2.

Optionally, the order requirement supports user configuration of one or more order parameters. Optionally, the order requirement of the WR 2 indicates an order level of the WR 2. Optionally, the order level supports user configuration.

Optionally, the order level indicates an order in which the transport network processes the WR 2 and one or more WRs (referred to as a WR 1) prior to the WR. An optimal processing solution for a plurality of WRs is sought while a service requirement and WR processing efficiency are balanced.

A represents an execution body, and b and c represent operations performed by the execution body A. Optionally, an order in which A performs b and c may indicate that A first performs b, and then performs c after performing b. Alternatively, an order in which A performs b and c may indicate that A first performs c, and then performs b after performing c. Alternatively, an order in which A performs b and c may indicate that A concurrently performs b and c. For example, A may be indicated to perform b and c using different processor cores, and the sequence of performing b and c is not limited. For example, A represents the transport network, and b and c respectively represent processing the WR 1 and processing the WR 2.

Alternatively, optionally, the order level indicates to process the WR 2 in an order-preserving manner or to process the WR 2 in a non-order-preserving manner. Processing the WR 2 in the order-preserving manner indicates that the WR 2 is processed first, and then the WR 1 is processed. Processing the WR 2 in the non-order-preserving manner indicates that processing on the WR 2 starts without waiting for completion of processing on the WR 1, or the order of processing the WR 1 and the WR 2 is not limited. For example, the WR 1 and the WR 2 may be concurrently processed. The following uses an example in which the order level indicates an order or a non-order.

Optionally, the order requirement further indicates a process (referred to as an order process) in which the order level functions. Optionally, the order process supports user configuration.

Based on the foregoing description, that the transport network processes the WR includes two processes: executing the WR and completing the WR. In some examples, the order process indicated by the order requirement is a process of executing the WR or a process of completing the WR, and a process that is not indicated may be considered as performing processing based on a default order level (or order). In some examples, the order process indicated by the order requirement includes the foregoing two processes, and the order level indicated by the order requirement may include order levels of the two processes. For example, the order requirement indicates that the order level is an order in a process of executing the WR, and the order level is a non-order in a process of completing the WR. In conclusion, the configuration item, that is, the order process, is added to the order requirement. This helps the user set different processes to a same order level or different order levels based on a service requirement, to seek the optimal processing solution for the plurality of WRs to a larger extent while the service requirement and WR processing efficiency are balanced.

Optionally, the order requirement further indicates an execution body (referred to as an order object) in which the order level functions. Optionally, the order object supports user configuration.

Based on the foregoing description, when the transport network includes the NIC 1 and the NIC 2, that the transport network processes the WR includes that the NIC 1 processes the WR and that the NIC 2 processes the WR. In some examples, the order object indicated by the order requirement is the NIC 1 or the NIC 2, and an object that is not indicated may be considered to be processed based on a default order level (or order). In some examples, the order object indicated by the order requirement includes the foregoing two objects, and the order level indicated by the order requirement may include the order levels of the two processes. For example, the order requirement indicates that the order level is an order in a process in which the NIC 1 processes the WR, and the order level is a non-order in a process in which the NIC 2 processes the WR. In conclusion, the configuration item, that is, the order object, is added to the order requirement. This helps the user set different objects to a same order level or different order levels based on a service requirement, to seek the optimal processing solution for the plurality of WRs to a larger extent while the service requirement and WR processing efficiency are balanced.

Optionally, the order requirement includes the foregoing three order parameters, and all the three order parameters support user configuration. In this way, this helps the user configure different processes of a same object to a same order level or different order levels based on a service requirement, or configure same processes of different objects to a same order level or different order levels, to seek the optimal processing solution for the plurality of WRs to a larger extent while the service requirement and WR processing efficiency are balanced.

The following describes the data processing method provided based on the foregoing idea.

In some examples, the sending identifier set includes a first sending identifier (denoted as no-order or n-o). The first sending identifier indicates a first order requirement, and the first order requirement indicates that an order is not required in any process (a process of executing a WR or completing a WR) of any object (a NIC 1 or a NIC 2). It is assumed that an order requirement corresponding to a WR 2 is the first order requirement, and the data processing method may include steps S401 to S408.

S401: A host 1 sequentially submits a WR 1 and the WR 2 to a WQ.

The host 1 sequentially submits the WR 1 and the WR 2 to the WQ. That the host 1 submits the WR to the WQ may mean that an APP 1 submits the WR to the WQ.

A manner in which the host 1 or the APP 1 submits the WR to the WQ is not limited in this application. Optionally, the host 1 or the APP 1 submits the WR to the WQ via communication middleware. Each of the WR 1 and the WR 2 carries a first sending identifier.

Optionally, the WR includes at least a message region and an order region (or referred to as an order capability field).

The message region indicates a NIC to obtain a to-be-sent message. It is assumed that messages indicated by message regions in the WR 1 and the WR 2 are a message 1 and a message 2, respectively. The message 1 and the message 2 indicate a data transmission operation 1 and a data transmission operation 2, respectively.

The order region indicates a sending identifier. It is assumed that order regions in the WR 1 and the WR 2 indicate first sending identifiers, respectively.

S402: When a NIC 1 identifies a first sending identifier in the WR 2, the NIC 1 concurrently performs the data transmission operation 1 and the data transmission operation 2.

In this application, a packet sent by the NIC 1 based on the WR 1 is referred to as a packet 1, and a packet sent by the NIC 1 based on the WR 2 is referred to as a packet 2. In some examples, each of the packet 1 and/or the packet 2 includes a plurality of fragmented packets.

Although in the WQ, an order of the WR 1 is prior to an order of the WR 2, when the NIC 1 identifies the first sending identifier in the WR 2, the NIC 1 may concurrently perform the data transmission operation 1 and the data transmission operation 2. This helps improve efficiency of processing the WR 2 by the NIC 1.

In some examples, the NIC 1 may include a plurality of processor cores (cores), and the NIC 1 may concurrently process the WR 1 and the WR 2 via the plurality of processor cores.

The NIC 1 may add a first receiving identifier to the packet 1 based on a first sending identifier in the WR 1, and add a first receiving identifier to the packet 2 based on the first sending identifier in the WR 2. The first sending identifier and the first receiving identifier may be the same, or may be different. The following uses an example in which the first sending identifier is the same as the first receiving identifier.

S403: A communication link separately forwards the packet 1 and the packet 2 to a NIC 2.

To improve transmission efficiency, optionally, the communication link may separately forward the packet 1 and the packet 2 to the NIC 2.

Optionally, the NIC 1 may separately add multi-path transmission identifiers to the packet 1 and the packet 2, and the multi-path transmission identifier indicates that the communication link separately transmits the packet 1 and the packet 2 in a multi-path transmission mode. After identifying the multi-path transmission identifiers in the packet 1 and the packet 2, the communication link forwards the packet 1 and the packet 2 to the NIC 2 in the multi-path transmission mode.

S404: When the NIC 2 identifies the first receiving identifier in the packet 2, the NIC 2 concurrently performs the data transmission operation 1 and the data transmission operation 2.

A packet generally carries a WR order identifier, and the WR order identifier indicates an order of a WR corresponding to the packet. A WR order identifier in the packet 1 and a WR order identifier in the packet 2 are used to determine a sequence in which the host 1 submits the WR 1 and the WR 2, or are used to determine a sequence in which the WR 1 and the WR 2 are in the WQ. For example, the WR order identifier carried in the packet 1 indicates that the order of the WR 1 is 1, and the WR order identifier carried in the packet 2 indicates that the order of the WR 2 is 2.

Although the NIC 2 may determine, based on the WR order identifier in the packet 2, that the order of the WR 2 corresponding to the packet 2 is later than the order of the WR 1 corresponding to the packet 1, when the NIC 2 identifies the first receiving identifier in the packet 2, the NIC 2 may concurrently perform the data transmission operation 1 and the data transmission operation 2. This helps improve efficiency of processing the packet 2 by the NIC 2.

In some examples, the NIC 2 may include a plurality of processor cores (cores), and the NIC 2 may concurrently perform receiving processing on the packet 1 and the packet 2 via the plurality of processor cores.

S405: The NIC 2 concurrently reports a completion status 1 of the data transmission operation 1 and a completion status 2 of the data transmission operation 2 to a host 2.

After receiving the packet 1 or performing the data transmission operation 1, the NIC 2 may generate a CQE 1, and send the CQE 1 to a CQ of the host 2. After receiving the packet 2, or after performing receiving processing on the packet 2, the NIC 2 may generate a CQE 2, and send the CQE 2 to the CQ of the host 2. Optionally, the NIC 2 may concurrently report the CQE 1 and the CQE 2.

S406: The NIC 2 separately sends a response packet 1 and a response packet 2.

After performing receiving processing on the packet 1, or after reporting the CQE 1, the NIC 2 may send the response packet 1 to the NIC 1. Similarly, after performing receiving processing on the packet 2, or after reporting the CQE 2, the NIC 2 may send the response packet 2 to the NIC 1.

A sequence in which the NIC 2 sends the response packet 1 and the response packet 2 is not limited in this application. For example, the NIC 2 may concurrently send the response packet 1 and the response packet 2.

S407: The communication link separately forwards the response packet 1 and the response packet 2 to the NIC 1.

To improve transmission efficiency, optionally, the communication link may separately forward the response packet 1 and the response packet 2 to the NIC 1 in the multi-path transmission mode.

Optionally, the NIC 2 may add a multi-path transmission identifier to each of the response packet 1 and the response packet 2, and the multi-path transmission identifier indicates that the communication link separately transmits the response packet 1 and the response packet 2 in the multi-path transmission mode. After identifying the multi-path transmission identifiers in the response packet 1 and the response packet 2, the communication link forwards the response packet 1 and the response packet 2 to the NIC 1 in the multi-path transmission mode.

S408: The NIC 1 separately reports the completion status 1 of the data transmission operation 1 and the completion status 2 of the data transmission operation 2 to the host 1.

In this application, the completion status 1 of S408 is not limited to being the same as the completion status 1 of S405, and the completion status 2 of S408 is not limited to being the same as the completion status 2 of S405.

After receiving the response packet 1, the NIC 1 may report, based on the response packet 1, a requester completion notification (denoted as a CQE 1') of the WR 1. Similarly, after receiving the response packet 2, the NIC 1 may report, based on the response packet 2, a requester completion notification (denoted as a CQE 2') of the WR 2.

Optionally, the NIC 1 may concurrently report the CQE 1' and the CQE 2'. This helps improve CQE reporting efficiency.

A procedure corresponding to S401 to S408 helps implement concurrent execution and concurrent acknowledgment of the data transmission operation 1 and the data transmission operation 2 at a requester, and implement concurrent execution and concurrent acknowledgment of the data transmission operation 1 and the data transmission operation 2 at a responder. This helps implement efficient processing of the data transmission operations at the requester and the responder. In addition, this helps implement multi-path transmission of the message 1 and the message 2 on the communication link, improve network bandwidth utilization, and reduce a message transmission delay.

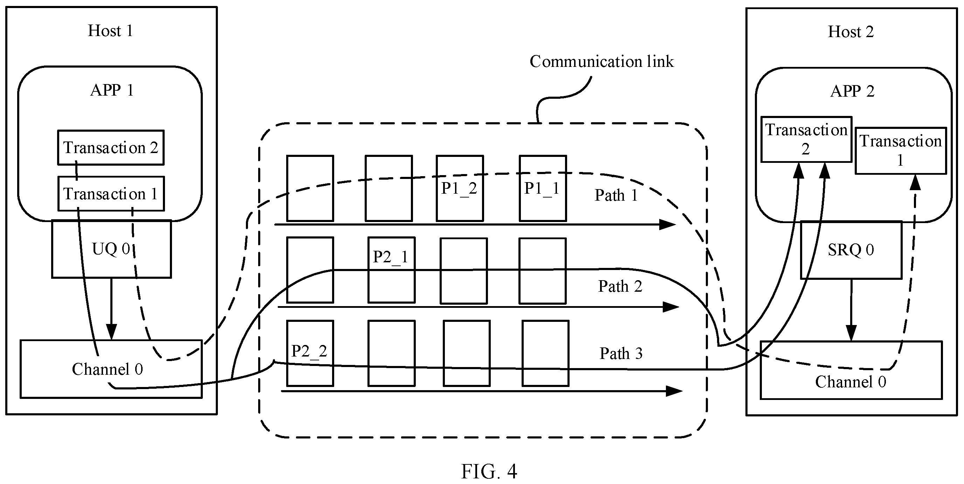

FIG. 4 schematically shows a possible diagram of the data processing method. Refer to FIG. 4. A transaction 1 and a transaction 2 respectively represent a data transmission transaction corresponding to a WR 1 and a data transmission transaction corresponding to a WR 2, a UQ 0 represents a user queue (user queue, UQ) of an APP 1, a channel 0 represents a data transmission channel established between a NIC 1 and a NIC 2, an SRQ 0 represents a shared receive queue (shared receive queue, SRQ) created by the NIC 2, P1_1 and P1_2 respectively represent fragmented packets in a packet 1, P2_1 and P2_2 respectively represent fragmented packets in a packet 2, and a blank rectangle in a communication link represents another packet or a fragmented packet in another packet. Refer to FIG. 4. The communication link may include three transmission paths (paths for short), and the fragmented packets in the packet 1 and the packet 2 are forwarded to a host 2 in a multi-path transmission mode.

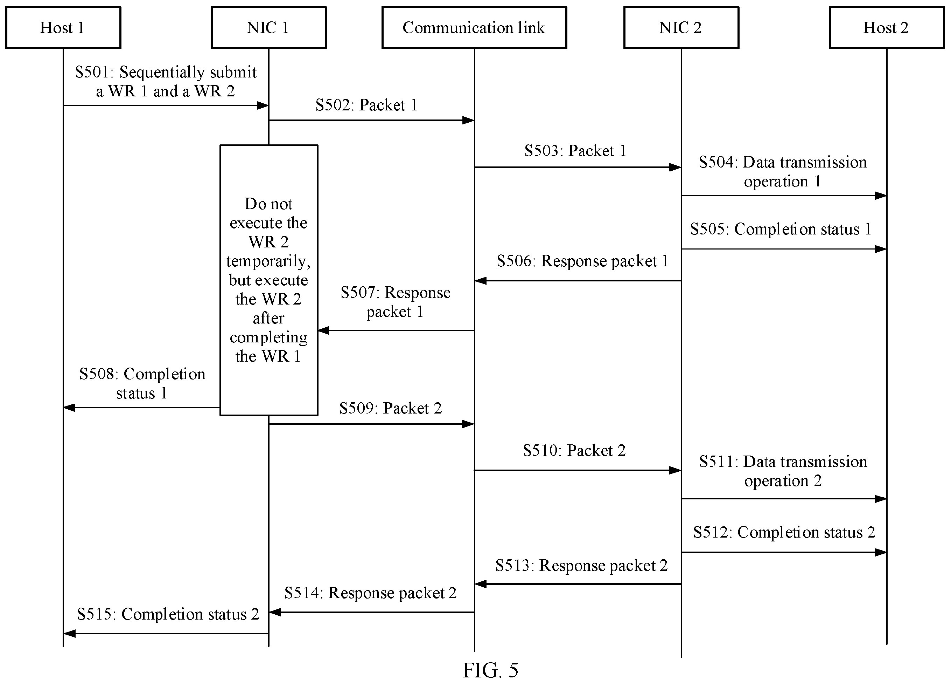

In some examples, the sending identifier set includes a second sending identifier (denoted as fence-order or f-o). The second sending identifier indicates a second order requirement, and the second order requirement indicates an order in any process (a process of executing a WR or completing a WR) of any object (a NIC 1 or a NIC 2). A specific implementation of the order requirement is not limited in this application. Optionally, the second sending identifier indicates that a WR 1 is completed before a WR 2 is executed, so that the second order requirement can be implemented. It is assumed that an order requirement corresponding to the WR 2 is the second order requirement. Refer to FIG. 5. The data processing method may include steps S501 to S515.

S501: A host 1 sequentially submits the WR 1 and the WR 2 to the NIC 1.

For step S501, refer to step S401 for understanding. Different from S401, the WR 2 carries the second sending identifier. A value of an order region in the WR 1 is not limited in step S501. The following uses an example in which the order region in the WR 1 is a first sending identifier.

S502: The NIC 1 sends a packet 1 to a communication link.

S503: The communication link forwards the packet 1 to a NIC 2.

S504: The NIC 2 performs a data transmission operation 1.

S505: The NIC 2 reports a completion status 1 of the data transmission operation 1 to a host 2.

S506: The NIC 2 sends a response packet 1.

S507: The communication link forwards a response packet 1 to the NIC 1.

S508: The NIC 1 reports the completion status 1 of the data transmission operation 1 to the host 1.

For steps S502 to S208, refer to content of steps S302 to S308 for understanding. Details are not described herein again.

S509: When the NIC 1 identifies the second sending identifier in the WR 2, the NIC 1 sends a packet 2 to the communication link after completing the WR 1.

When the NIC 1 identifies the second sending identifier in the WR 2, if the NIC 1 has not completed the WR 1 (for example, S508 has not been performed), the NIC 1 does not execute the WR 2 temporarily, but executes the WR 2 after completing the WR 1. For example, the NIC 1 sends the packet 2 to the communication link. This helps ensure that the NIC 1 processes the WR 1 first, and processes the WR 2 after completing the WR 1, and helps implement a strict order in each process performed by the NIC 1 and the NIC 2 on the WR 2.

In a possible implementation, when the NIC 1 identifies that a sending identifier in the WR 2 is the second sending identifier, the NIC 1 fetches the WR 2 from a WQ, places the WR 2 in an order queue, and fetches the WR 2 from the order queue and processes the WR 2 after reporting a completion status of the WR 1 to the host 1. In this way, even if the NIC 1 does not process the WR 2, another WR located after the WR 2 in the WQ may continue to be processed. This avoids congestion and improves WR processing efficiency.

Alternatively, in a possible implementation, when the NIC 1 identifies that a sending identifier in the WR 2 is the second sending identifier, the NIC 1 does not fetch the WR 2 from a WQ, the WR 2 remains in the WQ, and the NIC 1 fetches the WR 2 from the WQ and processes the WR 2 after reporting a completion status of the WR 1 to the host 1. In this way, before the NIC 1 processes the WR 2, the NIC 1 may not continue to process another WR located after the WR 2 in the WQ, and congestion occurs.

The NIC 1 may add a second receiving identifier to the packet 2 based on the second sending identifier in the WR 2. The second receiving identifier may be the n-o described above.

S510: The communication link forwards the packet 2 to the NIC 2.

S511: The NIC 2 performs a data transmission operation 2.

S512: The NIC 2 reports a completion status 2 of the data transmission operation 2 to the host 2.

S513: The NIC 2 sends a response packet 2.

S514: The communication link forwards the response packet 2 to the NIC 1.

S515: The NIC 1 reports the completion status 2 of the data transmission operation 2 to the host 1.

For steps S510 to S515, refer to content of S303 to S308 respectively, or refer to a processing process for the WR 2 in S403 to S408.

A procedure corresponding to FIG. 5 helps limit to processing the WR 2 in an order-preserving manner only at a requester, and does not limit to processing the WR 2 in the order-preserving manner at the communication link and a responder, so that order preserving can be implemented in each processing process of the WR 2 in an entire transport network. This reduces complexity of the solution, and improves WR processing efficiency.

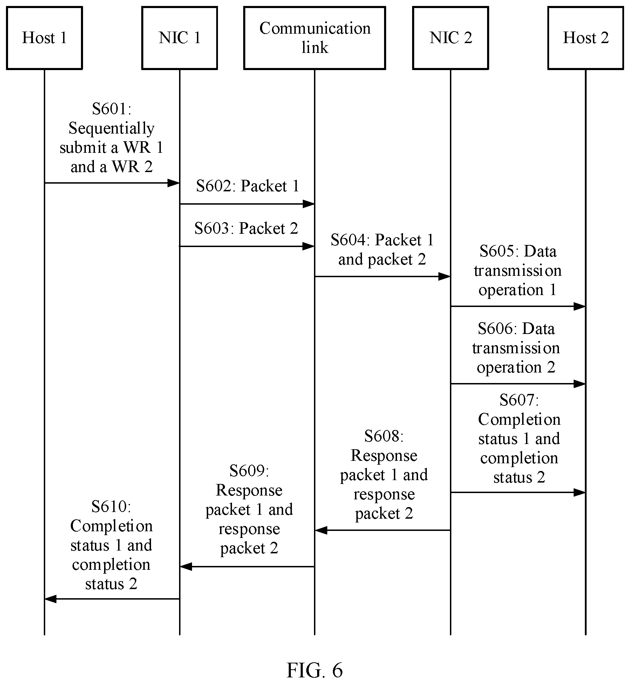

In some examples, the sending identifier set includes a third sending identifier (denoted as so-order or s-o). The third sending identifier indicates a third order requirement, and the third order requirement indicates to respectively preserve an order in processes in which a NIC 1 and a NIC 2 execute a WR. It is assumed that an order requirement corresponding to a WR 2 is the third order requirement. Refer to FIG. 6. The data processing method may include steps S601 to S610.

S601: A host 1 sequentially submits a WR 1 and the WR 2 to the NIC 1.

For step S601, refer to step S401 for understanding. Different from S401, the WR 2 carries the third sending identifier. A value of an order region in the WR 1 is not limited in step S601. The following uses an example in which the order region in the WR 1 is a first sending identifier.

S602: The NIC 1 sends a packet 1 to a communication link.

After obtaining the WR 1, the NIC 1 may execute the WR 1, for example, send the packet 1 to the communication link. For content of the packet 1, refer to the foregoing description of the packet 1.

S603: When the NIC 1 identifies the third sending identifier in the WR 2, the NIC 1 sends a packet 2 to the communication link after executing the WR 1.

When the NIC 1 identifies the third sending identifier in the WR 2, if the NIC 1 has not executed the WR 1 (for example, S602 has not been performed), the NIC 1 does not execute the WR 2 temporarily, but executes the WR 2 after executing the WR 1. For example, the NIC 1 sends the packet 2 to the communication link. This helps ensure that the NIC 1 first executes the WR 1 and executes the WR 2 after executing the WR 1, and implement order preserving in a process in which the NIC 1 executes the WR 2.

The NIC 1 may add a third receiving identifier to the packet 2 based on the third sending identifier in the WR 2. Optionally, the third receiving identifier may be the same as the third sending identifier. The following uses an example in which the third receiving identifier is the same as the third sending identifier for description.

S604: The communication link separately forwards the packet 1 and the packet 2 to a NIC 2.

For S604, refer to content of S403 for understanding.

S605: After receiving the packet 1, the NIC 2 performs a data transmission operation 1.

S606: When the NIC 2 identifies the third sending identifier in the packet 2, the NIC 2 performs a data transmission operation 2 after performing the data transmission operation 1.

When the NIC 2 identifies the third sending identifier in the WR 2, if the NIC 2 has not executed the WR 1 (for example, S605 has not been performed), the NIC 2 does not execute the WR 2 temporarily, but executes the WR 2 after executing the WR 1. For example, the NIC 2 performs the data transmission operation 2. This helps ensure that the NIC 2 first executes the WR 1 and executes the WR 2 after executing the WR 1, and implement order preserving in a process in which the NIC 2 executes the WR 2.

S607: The NIC 2 concurrently reports a completion status 1 of the data transmission operation 1 and a completion status 2 of the data transmission operation 2 to a host 2.

S608: The NIC 2 separately sends a response packet 1 and a response packet 2.

S609: The communication link separately forwards the response packet 1 and the response packet 2 to the NIC 1.

S610: The NIC 1 separately reports the completion status 1 of the data transmission operation 1 and the completion status 2 of the data transmission operation 2 to the host 1.

For steps S607 to S610, refer to S405 to S408 respectively.

A procedure corresponding to FIG. 6 helps separately execute the WR 2 in an order-preserving manner at a requester and a responder, and does not limit to transmitting a packet related to the WR 2 in the order-preserving manner on the communication link, and does not limit to completing the WR 2 in the order-preserving manner at the requester and the responder. This helps improve WR processing efficiency. In addition, this helps implement multi-path transmission of a message 1 and a message 2 on the communication link, improve network bandwidth utilization, and reduce a message transmission delay.

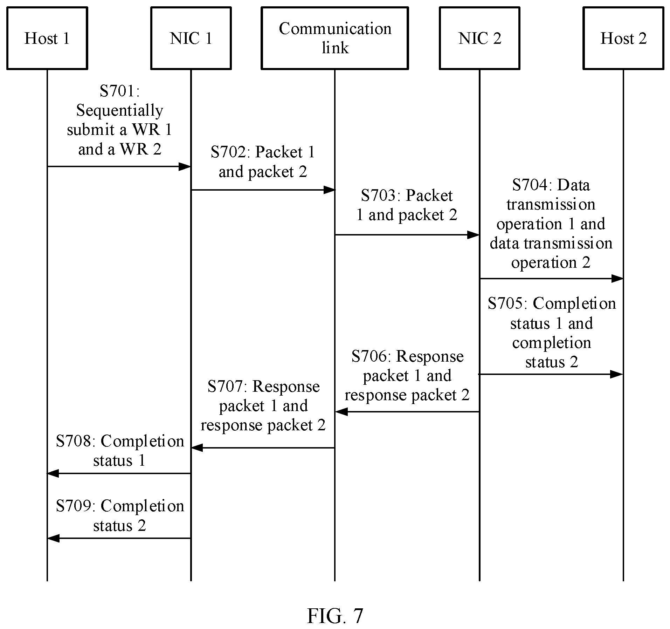

In some examples, the sending identifier set includes a fourth sending identifier (denoted as ic-order or ic-o). The fourth sending identifier indicates a fourth order requirement, and the fourth order requirement indicates an order in a process in which a NIC 1 completes a WR. It is assumed that an order requirement corresponding to a WR 2 is the fourth order requirement. Refer to FIG. 7. The data processing method may include steps S701 to S709.

S701: A host 1 sequentially submits a WR 1 and the WR 2 to a WQ.

For step S701, refer to step S401 for understanding. Different from S401, the WR 2 carries the fourth sending identifier. A value of an order region in the WR 1 is not limited in step S701. The following uses an example in which the order region in the WR 1 is a first sending identifier.

S702: The NIC 1 concurrently sends a packet 1 and a packet 2.

After identifying the fourth sending identifier in the WR 2, the NIC 1 concurrently performs a data transmission operation 1 and a data transmission operation 2, for example, concurrently sends the packet 1 and the packet 2. For this process, refer to S402.

The NIC 1 encapsulates a fourth receiving identifier into the packet 2. Optionally, the fourth receiving identifier is the first sending identifier (that is, n-o). The following uses an example in which the fourth receiving identifier is the same as the first sending identifier.

S703: A communication link separately forwards the packet 1 and the packet 2 to a NIC 2.

S704: The NIC 2 concurrently performs the data transmission operation 1 and the data transmission operation 2.

S705: The NIC 2 concurrently reports a completion status 1 of the data transmission operation 1 and a completion status 2 of the data transmission operation 2 to a host 2.

S706: The NIC 2 separately sends a response packet 1 and a response packet 2.

S707: The communication link separately forwards the response packet 1 and the response packet 2 to the NIC 1.

For S703 to S708, refer to S403 to S406 respectively.

S708: The NIC 1 reports the completion status 1 of the data transmission operation 1 to the host 1.

For S708, refer to S308.

S709: When the NIC 1 identifies the fourth sending identifier in the WR 2, the NIC 1 reports the completion status 2 of the data transmission operation 2 to the host 1 after completing the WR 1.

After the NIC 1 receives the response packet 2, when the NIC 1 identifies the fourth sending identifier in the WR 2, if the NIC 1 has not completed the WR 1 (for example, S708 has not been performed), the NIC 1 does not complete the WR 2 temporarily, but completes the WR 2 after completing the WR 1. For example, the NIC 1 reports the completion status 2 of the data transmission operation 2 to the host 1. This helps implement a strict order in a process in which the NIC 1 completes the WR 2, that is, helps ensure that the NIC 1 first reports the completion status 1 to the host 1, and then reports the completion status 2.

In this application, the completion status 1 of S708 is not limited to being the same as the completion status 1 of S705, and the completion status 2 of S709 is not limited to being the same as the completion status 2 of S705.

A procedure corresponding to S701 to S709 helps complete the WR 2 in an order-preserving manner at a requester, does not preserve an order in a process in which the requester executes the WR 2, does not limit to transmitting a packet related to the WR 2 in the order-preserving manner on the communication link, and does not limit to processing the WR 2 in the order-preserving manner at a responder. This helps improve WR processing efficiency. In addition, this helps implement multi-path transmission of a message 1 and a message 2 on the communication link, improve network bandwidth utilization, and reduce a message transmission delay.

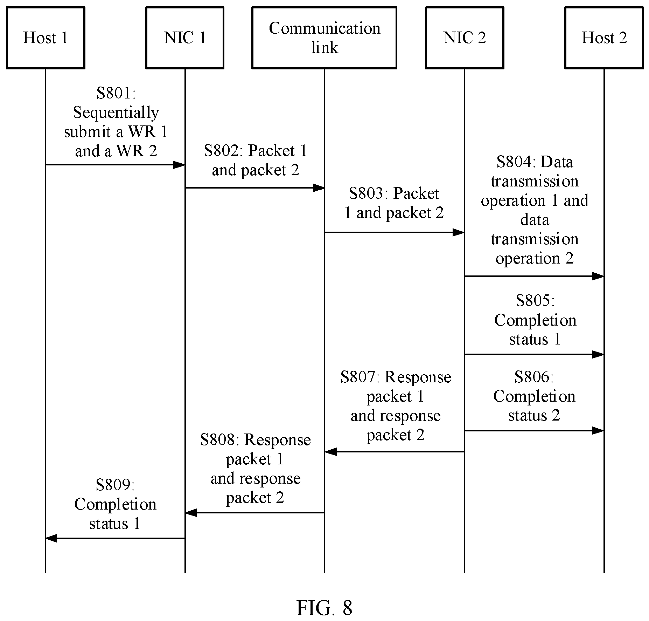

In some examples, the sending identifier set includes a fifth sending identifier (denoted as tc-order or tc-o). The fifth sending identifier indicates a fifth order requirement, and the fifth order requirement indicates an order in a process in which a NIC 2 completes a WR. It is assumed that an order requirement corresponding to a WR 2 is the fifth order requirement. Refer to FIG. 8. The data processing method may include steps S801 to S809.

S801: A host 1 sequentially submits a WR 1 and the WR 2 to a NIC 1.

For step S801, refer to step S301. Different from S301, an order region in the WR 2 is the fifth sending identifier. A value of an order region in the WR 1 is not limited in step S801. The following uses an example in which the order region in the WR 1 is a first sending identifier.

After identifying the fifth sending identifier in the WR 2, the NIC 1 concurrently performs a data transmission operation 1 and a data transmission operation 2, for example, concurrently sends a packet 1 and a packet 2. For this process, refer to S402.

The NIC 1 encapsulates a fifth receiving identifier into the packet 2. Optionally, the fifth receiving identifier may be the same as the fifth sending identifier. The following uses an example in which the fifth receiving identifier is the same as the fifth sending identifier.

S803: A communication link separately forwards the packet 1 and the packet 2 to the NIC 2.

S804: When the NIC 2 identifies the fifth receiving identifier in the packet 2, the NIC 2 concurrently performs the data transmission operation 1 and the data transmission operation 2.

For S803 and S804, refer to S403 and S404 respectively.

S805: The NIC 2 reports a completion status 1 of the data transmission operation 1 to a host 2.

After S804, after performing the data transmission operation 1, the NIC 2 sends a CQE 1 to the host 2.

S806: After the NIC 2 reports the completion status 1, the NIC 2 reports a completion status 2 of the data transmission operation 2 to the host 2.

After the NIC 2 identifies the fifth sending identifier in the packet 2, if the NIC 2 has not completed the WR 1 (for example, S805 has not been performed), the NIC 2 does not complete the WR 2 temporarily, but completes the WR 2 after completing the WR 2. For example, the NIC 2 reports the completion status 2 of the data transmission operation 2 to the host 2. This helps ensure that the NIC 2 first reports the completion status 1 to the host 2, and then reports the completion status 2. This helps implement a strict order in a process in which the NIC 2 completes the WR 2.

Optionally, the following describes a possible specific implementation solution. When identifying the fifth receiving identifier in the packet 2, the NIC 2 concurrently sends a message 1 and a message 2 to a memory space of the host 2. After the message 2 is sent to the host 2, a CQE 2 of the message 2 is generated. In this case, if the CQE 1 of the message 1 has not been generated or has not been sent to the host 2, the CQE 2 is written into a buffer (referred to as an out-of-order buf) of the NIC 2. After the NIC 2 generates or sends the CQE 1, the CQE 2 is fetched from the out-of-order buf and sent to the memory space of the host 2 to indicate an APP 2 to perform processing.

It is mentioned in step S704 that the NIC 2 stores the packet 2 or the message 2 in the out-of-order buf, and it is mentioned in step S805 that the CQE 2 is written into the out-of-order buf. It should be noted that the out-of-order buf represents the buffer of the NIC 2. In this application, the NIC 2 is not limited to writing the packet 2 (or the message 2) and the CQE 2 into a same storage area of the buffer.

This helps ensure that the NIC 2 (that is, a responder) efficiently performs the data transmission operation 1 and the data transmission operation 2, and sequentially acknowledges the message 1 and the message 2 in a strict order-preserving manner. Further, this ensures that the host 2 acknowledges receiving of the message 2 after acknowledging receiving of the message 1.

S807: The NIC 2 separately sends a response packet 1 and a response packet 2.

S808: The communication link separately forwards the response packet 1 and the response packet 2 to the NIC 2.

S809: The NIC 1 separately reports the completion status 1 of the data transmission operation 1 and the completion status 2 of the data transmission operation 2 to the host 1.

For steps S807 to S809, refer to S406 to S408 respectively.

A procedure corresponding to S801 to S809 helps complete the WR 2 in an order-preserving manner at the responder, does not preserve an order in a process in which the responder executes the WR 2, does not limit to transmitting a packet related to the WR 2 in the order-preserving manner on the communication link, and does not limit to processing the WR 2 in the order-preserving manner at the responder. This helps improve WR processing efficiency. In addition, this helps implement multi-path transmission of the message 1 and the message 2 on the communication link, improve network bandwidth utilization, and reduce a message transmission delay.

It should be noted that in FIG. 5 to FIG. 8, a single line segment with an arrow represents two actions that are separately or concurrently executed, and merely indicates that a sequence between the two actions is not limited, but the two actions are not limited to being executed at the same time. S807 shown in FIG. 8 is used as an example. The NIC 2 may first send the response packet 1 after S805, and send the response packet 2 after S806. Instead, the NIC 2 is limited to sending the response packet 1 and the response packet 2 after S806.

In this application, the first sending identifier to the fifth sending identifier and the first receiving identifier to the fifth receiving identifier are collectively referred to as order identifiers.

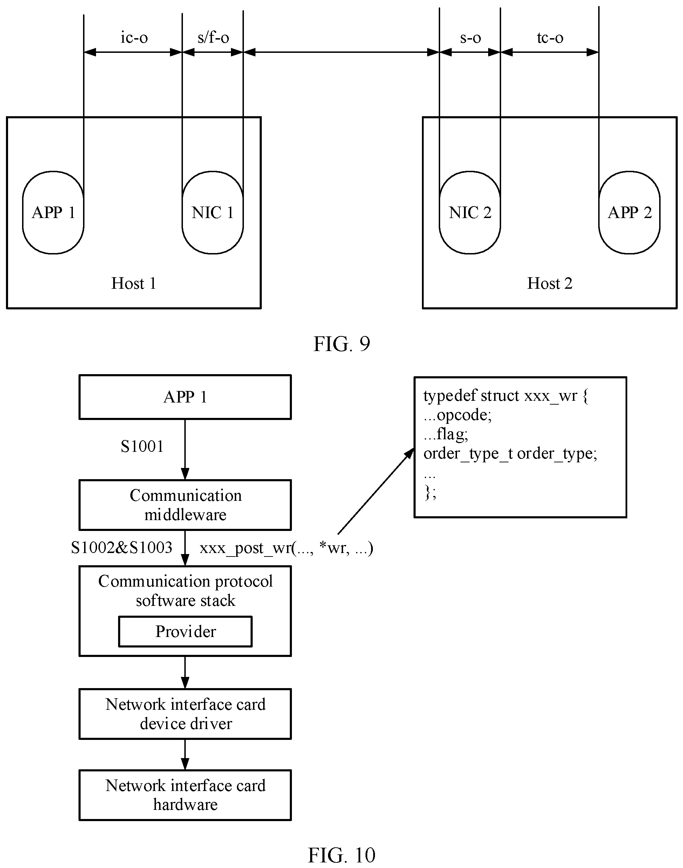

The foregoing uses examples to describe the five order identifiers: n-o, f-o, s-o, ic-o, and tc-o, each of which indicates a process in which order control is required (or referred to as a processing sub-procedure for processing the WR). FIG. 9 shows processing sub-procedures that are indicated by order identifiers and in which order control is required. Optionally, refer to FIG. 9. A process in which a requester (for example, a NIC 1) executes a WR supports configuration of n-o, s-o, or f-o, and a process in which the requester completes the WR supports configuration of n-o or ic-o. A process in which a responder (for example, a NIC 2) executes the WR supports configuration of n-o or s-o, and a process in which the responder completes the WR supports configuration of n-o or tc-o. n-o may be configured in a network transmission procedure by default, or a network transmission procedure supports order level configuration. It should be noted that, in the network transmission procedure, a communication link does not change a receiving identifier carried in a packet.

To implement an order in a plurality of processing sub-procedures (or referred to as sub-procedures for short), optionally, an order region may include a subfield corresponding to each of the plurality of processing sub-procedures. An example in which the order region includes four subfields is used. The four subfields are respectively denoted as a first subfield to a fourth subfield, and sequentially indicate order levels of executing the WR by the requester, completing the WR by the requester, executing the WR by the responder, and completing the WR by the responder.

To implement an order in the plurality of sub-procedures, or optionally, the order region or referred to as an order identifier may include a plurality of values. An example in which an order of four sub-procedures is implemented is used. The order region may include 24 possible values, and each value represents a combination of the foregoing four subfields. For example, when the order region is 0, it is equivalent to that the first subfield to the fourth subfield indicate n-o, n-o, n-o, and n-o, respectively. For example, when the order region is 1, it is equivalent to that the first subfield to the fourth subfield indicate n-o, n-o, n-o, and tc-o, respectively.

In this application, the order identifier carried in the WR is not limited to being added by a host 1. Optionally, after receiving a communication operation request initiated by the host 1 or an APP 1, the communication middleware described above encapsulates the WR to which the order identifier is added, and then submits the encapsulated WR to a WQ.

FIG. 10 schematically shows a process in which a host 1 submits a WR. For a process of using a WR order level in a user programming model, refer to FIG. 10. Refer to FIG. 10. The process includes the following steps.

S1001: An APP 1 sequentially initiates a communication operation request 1 and a communication operation request 2 via communication middleware.

The APP 1 may initiate, via the communication middleware, a communication operation request indicating to transmit a message. It is assumed that the APP 1 sequentially initiates, via the communication middleware, the communication operation request 1 indicating to transmit a message 1 and the communication operation request 2 indicating to transmit a message 2. A type of the communication middleware is not limited in this application. For example, the communication middleware may be a multi-point interface (multi-point interface, MPI).

S1002: The communication middleware determines, based on information about the message 1 and information about the message 2, an order identifier corresponding to the communication operation request 2.

The communication middleware may determine, based on the information about the message 1 and the information about the message 2, the order identifier corresponding to the communication operation request 2. The information about the message may include an operation type and/or a service scenario of the message. The communication middleware may determine a dependency relationship between the message 1 and the message 2 based on an operation type of the message 1 and an operation type of the message 2, and further determine an order level of the communication operation request 2 (or the message 2).

S1003: The communication middleware separately submits a WR 1 of the communication operation request 1 and a WR 2 of the communication operation request 2.

The communication middleware may encapsulate and submit the WR 1 based on the communication operation request 1, and encapsulate and submit the WR 2 based on the communication operation request 2 and the corresponding order level.

Optionally, the communication middleware may encapsulate a data structure of post_wr() based on a communication protocol software stack interface format. It is assumed that a data structure of the WR 2 is shown in FIG. 10. An "order_type_t order_type" field indicates a sending identifier of the WR 2, and further indicates an order requirement of the WR 2. Optionally, after encapsulating the WR 1 and the WR 2, the communication middleware may invoke a post_wr() interface to sequentially submit the WR 1 and the WR 2.

For a subsequent processing procedure, refer to content of the procedure described above for understanding. A NIC 1 may include a communication protocol software stack and a hardware processing module (including a network interface card device driver and network interface card hardware). A process in which the NIC 1 executes a WR may specifically include that a communication protocol driver and the hardware processing module parse the WR and execute the WR.

Optionally, a host or the communication middleware may add at least one identifier (referred to as a first target identifier) to the WR from a plurality of identifiers. The plurality of identifiers may include at least two order identifiers described above. Optionally, the at least two order identifiers may be at least two sending identifiers described above. A basis for the host or the communication middleware to match an order level for the WR is not limited in this application.

Optionally, the host or the communication middleware may select, according to a preset rule and based on the information about the message 1 and the information about the message 2, the first target identifier from the plurality of identifiers, and add the first target identifier to the WR 2. For the information about the message 1 and the information about the message 2, refer to related content in step S1002. Optionally, the preset rule may be fixedly set, or the preset rule is configured by a user.

In an example, the preset rule may meet stipulation of an InfiniBand protocol (IB protocol for short) on a WR operation order (for example, refer to related content of the IB protocol). An example in which the order region described above may include 24 possible values. As specified in the IB protocol, when operations corresponding to the WR 1 and the WR 2 are both write operations, a strict order is required between the WR 1 and the WR 2. Therefore, the host or the communication middleware may set a value of an order region in the WR 2 to 0, to indicate that order preserving is separately implemented in a process in which a requester executes the WR, a process in which the requester completes the WR, a process in which a responder executes the WR, and a process in which the responder completes the WR.

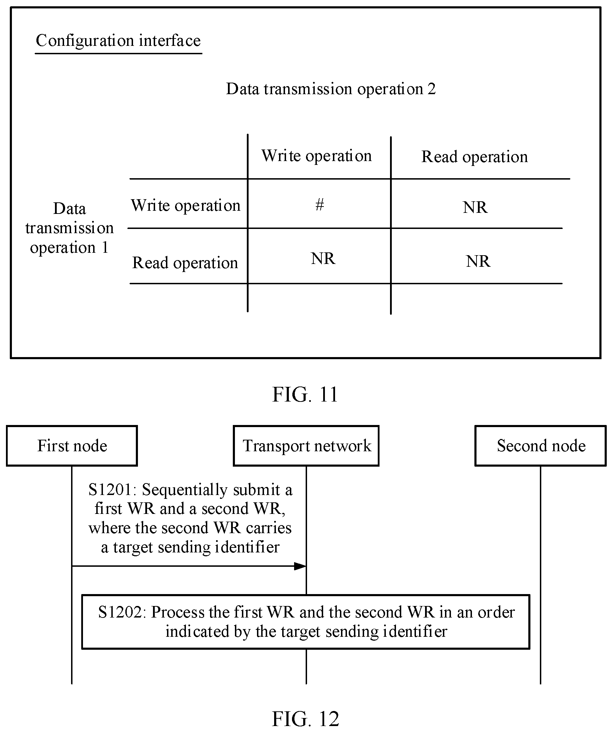

In an example, the user configures the preset rule through a configuration interface. FIG. 11 schematically shows a possible form of the configuration interface. In FIG. 11, "#" indicates that a strict order is required, and "NR" indicates that an order is not required. A preset rule configured in FIG. 11 indicates that reading is allowed to override writing, writing is allowed to override reading, reading is allowed to override reading, and writing cannot override writing. "Reading is allowed to override writing" is used as an example. The preset rule indicates that when an operation type of a WR 1 and an operation type of a WR 2 are respectively a write operation and a read operation, an operation of the WR 2 may be performed before (or referred to as overrides) an operation of the WR 1. An example in which an order region includes four subfields is used. Correspondingly, a host 1 or communication middleware may set a first subfield to n-o. In this way, refer to FIG. 11. In comparison with a case in which a NIC 1 sequentially performs the write operation of the WR 1 and the read operation of the WR 2 by using a single process, the preset rule shown in FIG. 11 is configured to enable the NIC 1 to concurrently perform the write operation of the WR 1 and the read operation of the WR 2 by using two processes. This helps improve WR execution efficiency.

It should be noted that, in comparison with FIG. 11, the configuration interface may support a user in setting an order between more or fewer operation types. In some examples, the configuration interface shown in FIG. 11 sets an order between any two operations to n-o by default. For example, all "#" shown in FIG. 11 is replaced with "NR". The user may change a part of the order based on a service requirement. An order is not bound to a specific operation, and order preserving is performed only when the user specifies an order for all operations.

Optionally, an order is provided for the user as a basic capability of a WR, and the user controls an order capability by setting an attribute of the WR. Specifically, as a basic attribute of the WR, the order capability is provided for the user to access through a software programming interface for submitting the WR. When the user submits the WR, sub-procedures that require an order are determined, for example, whether an order of executing WRs is involved (whether there is a dependency during data execution of a previous operation), whether an order of completing the WRs is involved (whether there is a dependency in a completion notification of the previous operation), and an end side (for example, a requester or a responder) involving the order. After the sub-procedures that require an order are determined, a corresponding order capability is selected. For example, if only responder data completion notification procedure is involved, the responder needs to generate CQEs in sequence. In this case, the order region of the WR 2 is set to tc-order (for a specific communication protocol, an order rule table may be provided according to the protocol). Then, when the user invokes the software programming interface to submit the WR, the order capability is transferred to a communication protocol software interface as a parameter.

A network interface card device (for example, the foregoing NIC 1) may perform order preserving based on a sending identifier (or an indicated order requirement) in the WR, and transfer, to the responder via a packet, a receiving identifier indicating the order requirement. The receiving identifier may be, for example, any receiving identifier described above, the identifier n-o, the identifier s-o, or the identifier tc-o. Specifically, a communication protocol software module performs order preserving based on an indication of the order capability parameter. If the order capability is s-o/f-o/ic-o, order preserving needs to be performed at the requester. When a communication packet is edited, the receiving identifier is encapsulated into a packet, and the packet is transmitted to the responder for processing. After receiving the packet from a communication link, the responder extracts an order capability field (that is, the receiving identifier), and performs corresponding order preserving based on an indication of the order capability field. For example, after s-o is identified, before it is determined that receiving processing is performed on a message (for example, a message 2), execution of a previous message (for example, a message 1) needs to be completed. For example, in an out-of-order case, receiving processing is sequentially performed on the message 1 and the message 2 through buffering or retransmission of lost packets. After receiving the message normally, the responder returns a response packet. After receiving the response packet, if a CQE needs to be generated, the requester needs to re-read the sending identifier in a case in which the WR is submitted. If the sending identifier is the identifier ic-o, CQEs need to be generated in an order. For example, a CQE 1 is reported before a CQE 2.

The communication link involved in the foregoing method may use a new transmission protocol, or may be based on an existing network transmission protocol. For example, a service scenario of the foregoing method may support a connection model based on a connection (connection) or a reliable datagram, for example, a transmission protocol like socket (socket) communication/IB/unified bus (unified bus, UB). Optionally, in addition to being used for conventional send (send)/receive (receive, recv) message semantics, the data processing method also supports memory semantics (including service operation semantics), and is not limited to network transmission semantics.

FIG. 12 schematically shows another possible procedure of the data processing method. The method shown in FIG. 12 may be applied to a communication system. The communication system includes a first node, a second node, and a transport network, where the transport network is used to forward data between the first node and the second node.

Optionally, the communication system is a single host (for example, the computer device shown in FIG. 2), and the first node and the second node are deployed in the same host. For example, the first node is a CPU (or an application program running on a CPU) of the host, and the second node is a hard disk of the host. The transport network is used to transmit data in the host. For example, the transport network includes a NIC and a bus. The NIC may be a physical device or a virtual device running on a physical device. Optionally, the physical device is the host in which the first node and the second node are located. When the NIC is a physical device, a manner of connecting the NIC to the host is not limited in this application. For example, the NIC may be inserted into the bus of the host, or integrated into a mainboard of the host.

Alternatively, optionally, the communication system includes a plurality of hosts. The host may be a physical device or a virtual device running on a physical device. The first node and the second node are different hosts or apparatuses deployed in different hosts. A type of the apparatus is not limited in this application. The apparatus may be a virtual apparatus. For example, the apparatus may be an application program running on the host. Alternatively, the apparatus is a physical apparatus. For example, the apparatus may be a CPU of the host or a hard disk of the host. The transport network includes a first network interface card connected to the first node and a second network interface card connected to the second node. Optionally, the transport network may further include a communication link between the first network interface card and the second network interface card. The network interface card may be a physical device or a virtual device running on a physical device. When the network interface card is a physical device, a manner of connecting the network interface card to the host is not limited in this application. For example, the network interface card may be inserted into a bus of the host, or integrated into a mainboard of the host.

In a possible implementation, the communication system is shown in FIG. 1. The first node and the second node are respectively the host 1 and the host 2, or are respectively the APP 1 and the APP 2. The transport network includes the NIC 1 and the NIC 2. Optionally, a communication link between the NIC 1 and the NIC 2 is further included.

Refer to FIG. 12. The procedure may include steps S1201 and S1202.

S1201: The first node sequentially submits a first work request WR and a second WR to the transport network.

The first node may sequentially submit the first work request WR and the second WR to the transport network. Optionally, the first node may sequentially submit the first WR and the second WR to a WQ created by the transport network for the first node.

The first WR and the second WR point to a first message and a second message respectively, the first message indicates to perform a first data transmission operation between the first node and the second node, and the second message indicates to perform a second data transmission operation between the first node and the second node. The second WR carries a target sending identifier, and the target sending identifier indicates an order in which the transport network processes the first WR and the second WR.

In some examples, the target sending identifier may be any one of the order identifiers described above, for example, may be any one of the first sending identifier to the fifth sending identifier, the identifier n-o, s-o, f-o, tc-o, or ic-o, or any combination of the plurality of identifiers, or indicates a function indicated by any one of the plurality of identifiers.

A manner in which the first node submits a WR to the transport network is not limited in this application. For example, the first node submits the WR according to the process shown in FIG. 10. A rule based on which the first node adds the target sending identifier to the second WR is not limited in this application. Optionally, the first node selects the target sending identifier from a plurality of sending identifiers, and adds the target sending identifier to the second WR. The rule may be fixedly set, or the rule is configured by a user. For content of the rule, refer to related content of the preset rule described above.

A type of the first data transmission operation and a type of the second data transmission operation are not limited in this application. For example, the first data transmission operation or the second data transmission operation may be a write (write) operation, a read (read) operation, a send (send) operation, or an atomic (atomic) operation. The type of the first data transmission operation and the type of the second data transmission operation may be the same, or may be different.

After the first node sequentially submits the first WR and the second WR to the transport network, the transport network may sequentially obtain the first WR and the second WR. Optionally, the transport network may sequentially obtain the first WR and the second WR from the WQ.

The transport network includes at least one network interface card. Therefore, that the transport network obtains the WR in this application may specifically mean that the network interface card connected to the first node obtains the WR.

A submission order of the first WR is not limited to being adjacent to a submission order of the second WR in this application, provided that the first WR is submitted to the transport network before the second WR. A quantity of WRs in the first WR is not limited in this application. For example, the first WR may be a single WR, or may include a plurality of WRs.

Optionally, the target sending identifier further indicates the type of the first data transmission operation (or referred to as a type of the WR). In this application, a type indicated by the target sending identifier is referred to as a target type. The first WR is a WR of this type in a plurality of WRs submitted before the second WR. In other words, the target sending identifier indicates an order in which the transport network processes the second WR and the WR of the target type that is submitted before the second WR.

S1202: The transport network processes the first WR and the second WR in the order indicated by the target sending identifier.

That the transport network processes the WR may include: The transport network performs a corresponding data transmission operation. Optionally, that the transport network processes the WR may further include: The transport network reports a completion status of the data transmission operation. A specific procedure in which the transport network processes the WR is not limited in this application. For example, the transport network may process the WR according to the procedure shown in FIG. 3.

In a process in which the transport network processes the first WR and the second WR in the order indicated by the target sending identifier, the transport network performs the first data transmission operation and the second data transmission operation in a first order, and the transport network reports a completion status of the first data transmission operation and a completion status of the second data transmission operation in a second order. Optionally, the first order is the order indicated by the target sending identifier, and/or the second order is the order indicated by the target sending identifier.

A type of the order indicated by the target sending identifier is not limited in this application. For example, the target sending identifier indicates to first process the first WR and then process the second WR, in other words, to process the first WR and the second WR in an order-preserving manner. Alternatively, for example, the target sending identifier indicates to first process the second WR and then process the first WR. Alternatively, for example, the target sending identifier indicates to process the first WR and the second WR in parallel, for example, indicates the first network interface card to use different processor cores to process the first WR and the second WR. Alternatively, for example, the target sending identifier indicates that the sequence of processing the first WR and the second WR is not limited.

In some examples, the target sending identifier indicates an order (that is, the first order) in which the transport network performs the first data transmission operation and the second data transmission operation. Correspondingly, step S1202 includes: The transport network performs the first data transmission operation and the second data transmission operation in the order indicated by the target sending identifier. For example, the transport network first performs the first data transmission operation, and then performs the second data transmission operation.

When the transport network includes the first network interface card and the second network interface card, that the transport network performs the first data transmission operation may include: The first network interface card sends a first packet carrying the first message to the second network interface card; and the second network interface card performs the first transmission operation after receiving the first packet. That the transport network performs the second data transmission operation may include: The first network interface card sends a second packet carrying the second message to the second network interface card; and the second network interface card performs the second transmission operation after receiving the second packet. Optionally, the first packet carries the first message, and the second packet carries the second message.

In an example, the target sending identifier may indicate an order (referred to as a requester execution order) in which the first network interface card sends the first packet and the second packet to the second network interface card. Correspondingly, step S1202 includes:
S12021A: The first network interface card sends the first packet and the second packet to the second network interface card in the requester execution order.
S12022A: The second network interface card performs the first data transmission operation and the second data transmission operation in a default order.

For details that the first network interface card sends the first packet and the second packet to the second network interface card in the requester execution order, refer to content of step S402, S502, S602, S702, or S802 described above. A type of the default order is not limited in this application.

In an example, the target sending identifier may indicate the first network interface card to encapsulate a target receiving identifier into the second packet, and the target receiving identifier indicates an order (referred to as a responder execution order) in which the second network interface card performs the first data transmission operation and the second data transmission operation. Correspondingly, step S1202 includes:
S12021B: The first network interface card sends the first packet and the second packet to the second network interface card in a default order.
S12022B: The second network interface card performs the first data transmission operation and the second data transmission operation in a responder execution order.

For details that the second network interface card performs the first data transmission operation and the second data transmission operation in the responder execution order, refer to content of step S404, S504, S604, S704, or S804 described above. A type of the default order is not limited in this application.

In an example, the target sending identifier may indicate an order (that is, a requester execution order) in which the first network interface card sends the first packet and the second packet to the second network interface card, and indicate the first network interface card to encapsulate a target receiving identifier into the second packet. The target receiving identifier indicates an order (that is, a responder execution order) in which the second network interface card performs the first data transmission operation and the second data transmission operation. Correspondingly, step S1202 includes:
S12021C: The first network interface card sends the first packet and the second packet to the second network interface card in the requester execution order.
S12022C: The second network interface card performs the first data transmission operation and the second data transmission operation in the responder execution order.

The target sending identifier and the target receiving identifier may be the same or different. The requester execution order and the responder execution order may be the same or different.

Alternatively, in some examples, the target sending identifier indicates an order (that is, the second order) in which the transport network reports the completion status of the first data transmission operation and the completion status of the second data transmission operation. Correspondingly, step S1202 includes: The transport network reports the completion status of the first data transmission operation and the completion status of the second data transmission operation in the order indicated by the target sending identifier. For example, the transport network first reports the completion status of the first data transmission operation, and then reports the completion status of the second data transmission operation.

When the transport network includes the first network interface card and the second network interface card, that the transport network reports the completion status of the first data transmission operation and the completion status of the second data transmission operation may include: The second network interface card separately reports the completion status of the first data transmission operation (referred to as a completion status of a first responder) and the completion status of the second data transmission operation (referred to as a completion status of a second responder) to the second node; and the first network interface card separately reports the completion status of the first data transmission operation (referred to as a completion status of a first requester) and the completion status of the second data transmission operation (referred to as a completion status of a second requester) to the first node.

In an example, the target sending identifier may indicate the first network interface card to encapsulate a target receiving identifier into the second packet, and the target receiving identifier indicates an order (referred to as a responder completion order) in which the second network interface card reports a completion status of a first responder and a completion status of a second responder to the second node. Correspondingly, step S1202 further includes:
S12023A: The second network interface card reports the completion status of the first responder and the completion status of the second responder to the second node in the responder completion order.
S12024A: The first network interface card reports a completion status of a first requester and a completion status of a second requester to the first node in a default order.

For details that the second network interface card reports the completion status of the first responder and the completion status of the second responder to the second node in the responder completion orders, refer to content of step S405, S505, S605, S705, or S805 described above. A type of the default order is not limited in this application.

In an example, the target sending identifier may indicate an order (referred to as a requester completion order) in which the first network interface card reports a completion status of a first requester and a completion status of a second requester to the first node. Correspondingly, step S1202 further includes:
S12023B: The second network interface card reports a completion status of a first responder and a completion status of a second responder to the second node in a default order.
S12024B: The first network interface card reports the completion status of the first requester and the completion status of the second requester to the first node in the requester completion order.

For details that the first network interface card reports the completion status of the first requester and the completion status of the second requester to the first node in the requester completion order, refer to content of step S408, S508, S608, S708, or S808 described above. A type of the default order is not limited in this application.

In an example, the target sending identifier may indicate a responder completion order, and indicate a requester completion order. Correspondingly, step S1202 further includes:
S12023C: The second network interface card reports a completion status of a first responder and a completion status of a second responder to the second node in the responder completion order.
S12024C: The first network interface card reports a completion status of a first requester and a completion status of a second requester to the first node in the requester completion order.

The target sending identifier and a target receiving identifier may be the same or different. The requester completion order and the responder completion order may be the same or different.

When the transport network includes the first network interface card and the second network interface card, the first network interface card and the second network interface card may exchange data through the communication link. In step S1202, a manner used by the first network interface card and the second network interface card to forward the data is not limited in this application. For example, refer to content of step S403. To fully utilize network bandwidth, the communication link may forward the data between the first network interface card and the second network interface card in a multi-path transmission mode.

The methods provided in this application are described above. For ease of better implementing the solutions in embodiments of this application, correspondingly related devices configured to cooperate in implementing the solutions are further provided below.

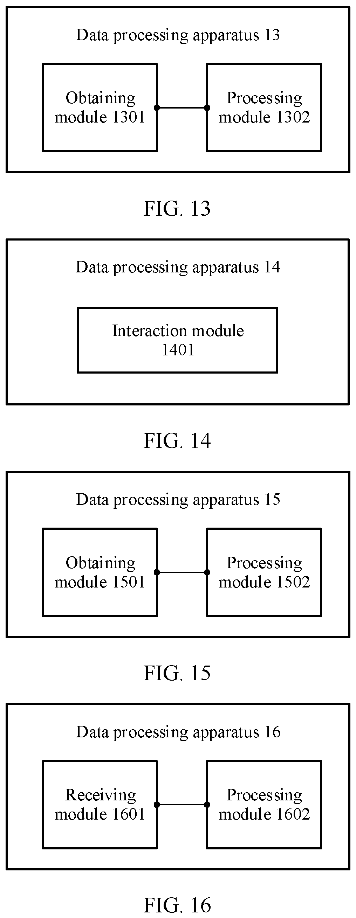

FIG. 13 is a diagram of a structure of a data processing apparatus according to an embodiment of this application. Optionally, a data processing apparatus 13 may be the transport network or a network interface card in the transport network. The network interface card may be a network interface card of a first node, or the network interface card includes a first network interface card of a first node and a second network interface card of a second node. As shown in FIG. 13, the data processing apparatus 13 includes an obtaining module 1301 and a processing module 1302.

The obtaining module 1301 is configured to sequentially obtain a first work request WR and a second WR that are submitted by the first node. Optionally, the obtaining module 1301 sequentially obtains, from a WQ, the first WR and the second WR that are submitted by the first node.

The processing module 1302 is configured to perform the method of step S1202, perform all or some steps of S402 to S408, perform all or some steps of S502 to S508, perform all or some steps of S602 to S608, perform all or some steps of S702 to S708, or perform all or some steps of S802 to S808.

The two modules may communicate data to each other through a communication channel. It should be understood that the modules included in the data processing apparatus 13 may be software modules, or may be hardware modules, or some of the modules are software modules and some of the modules are hardware modules.

For possible implementations and beneficial effects of the obtaining module 1301 and the processing module 1302 in the data processing apparatus 13, refer to the related content of the corresponding method. Details are not described herein again.

FIG. 14 is a diagram of a structure of a data processing apparatus according to an embodiment of this application. Optionally, a data processing apparatus 14 may be the first node, the host 1, or the APP 1. As shown in FIG. 14, the data processing apparatus 14 includes an interaction module 1401.

The interaction module 1401 is configured to perform the method of step S1201, or perform the method of S401, S501, S601, S701, or S801.

For a possible implementation and a beneficial effect of the interaction module 1401 in the data processing apparatus 14, refer to the related content of the corresponding method. Details are not described herein again.

FIG. 15 is a diagram of a structure of a data processing apparatus according to an embodiment of this application. Optionally, a data processing apparatus 15 may be a first network interface card deployed in a first node. The first network interface card may be the NIC 1 described above. As shown in FIG. 15, the data processing apparatus 15 includes an obtaining module 1501 and a processing module 1502.

The obtaining module 1501 is configured to sequentially obtain a first work request WR and a second WR that are submitted by the first node. Optionally, the obtaining module 1501 sequentially obtains, from a WQ, the first WR and the second WR that are submitted by the first node.

The processing module 1502 is configured to perform step S12021A, S12021B, or S12021C, or perform S402, S502, S602, S702, or S802. Optionally, the processing module 1502 is further configured to perform step S12023A, S12023B, or S12023C, or perform S408, S508, S608, S708, or S808.

The two modules may communicate data to each other through a communication channel. It should be understood that the modules included in the data processing apparatus 15 may be software modules, or may be hardware modules, or some of the modules are software modules and some of the modules are hardware modules.

For possible implementations and beneficial effects of the obtaining module 1501 and the processing module 1502 in the data processing apparatus 15, refer to the related content of the corresponding method. Details are not described herein again.

FIG. 16 is a diagram of a structure of a data processing apparatus according to an embodiment of this application. Optionally, a data processing apparatus 16 may be a second network interface card deployed in a second node. The second network interface card may be the NIC 2 described above. As shown in FIG. 16, the data processing apparatus 16 includes a receiving module 1601 and a processing module 1602.

The receiving module 1601 is configured to separately receive a first packet and a second packet that are sent by a first network interface card. The first network interface card, the first packet, and the second packet may be understood with reference to the related content in the method procedure corresponding to FIG. 12. For example, the first network interface card is disposed in a first node, the first packet carries a first message to which a first work request WR points, the second packet carries a second message to which a second WR points, the first WR and the second WR are sequentially submitted by the first node, the first message indicates to perform a first data transmission operation between the first node and the second node, the second message indicates to perform a second data transmission operation between the first node and the second node, the second packet carries a target receiving identifier, and the target receiving identifier indicates an order in which the data processing apparatus processes the first WR and the second WR.

The processing module 1602 is configured to process the first message and the second message in the order indicated by the target receiving identifier. Optionally, the processing module 1602 performs step S12022A, S12022B, or S12022C, or performs S404, S504, S604, S704, or S804. Optionally, the processing module 1602 is further configured to perform step S12024A, S12024B, or S12024C, or perform S405, S505, S605, S705, or S805. Optionally, the processing module 1602 is further configured to perform step S406, S506, S606, S706, or S806.

The two modules may communicate data to each other through a communication link. It should be understood that the modules included in the data processing apparatus 16 may be software modules, or may be hardware modules, or some of the modules are software modules and some of the modules are hardware modules.

For possible implementations and beneficial effects of the receiving module 1601 and the processing module 1602 in the data processing apparatus 16, refer to the related content of the corresponding method. Details are not described herein again.

It should be noted that the structure of the data processing apparatus is merely used as an example, and should not constitute a specific limitation. The modules in the data processing apparatus may be added, removed, or combined as required. In addition, operations and/or functions of the modules in the data processing apparatus are intended to implement corresponding procedures of the method. For brevity, details are not described herein again.

This application further provides a communication system. Optionally, the communication system includes the data processing apparatus 13 and the data processing apparatus 14. For example, the communication system is a communication system (for example, the communication system shown in FIG. 1) to which the method procedure corresponding to FIG. 12 is applicable. Alternatively, optionally, the communication system includes the data processing apparatus 15 and the data processing apparatus 16. For example, the communication system includes the NIC 1 and the NIC 2 that are described above, or includes the first network interface card and the second network interface card that are described above. Optionally, the communication system further includes the communication link described above.

This application further provides a computing device. For a structure of the computing device, refer to FIG. 2. Optionally, a memory of the computing device stores code corresponding to each module of any one of the foregoing data processing apparatuses. A processor executes the code to implement a function of each module of the corresponding data processing apparatus, and performs a method step performed by the corresponding module.

This application further provides a computer-readable storage medium. The computer-readable storage medium stores a computer program. When the computer program is executed by a processor, some or all of the steps recorded in any one of the foregoing method embodiments may be implemented. The computer-readable storage medium may be any available medium accessible to a general-purpose or special-purpose computer.

An embodiment of this application further provides a computer program. The computer program includes instructions, and when the computer program is executed by a computer, the computer is enabled to perform some or all of the steps in any one of the method embodiments. A person of ordinary skill in the art may understand that the computer-readable storage medium includes any non-transitory (non-transitory) machine-readable medium that can store program code, for example, a USB flash drive, a removable hard disk, a magnetic disk, an optical disc, a RAM, an SSD, or a non-volatile memory (non-volatile memory).

In the foregoing embodiments, the description of each embodiment has respective focuses. For a part that is not described in detail in an embodiment, refer to related descriptions in other embodiments.

It should be noted that, for brief description, the foregoing method embodiments are represented as a series of action combinations. However, a person skilled in the art should understand that this application is not limited to the described action order, because some steps may be performed in other orders or simultaneously according to this application. It should be further appreciated by a person skilled in the art that embodiments described in this specification all belong to example embodiments, and the involved actions and modules are not necessarily required by this application.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. "A and/or B" in embodiments of this application may be understood as including two solutions: "A and B" and "A or B." "A plurality of" in this application may be understood as two or more.

In the several embodiments provided in this application, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

It may be clearly understood by a person skilled in the art that, for the purpose of convenient and brief description, for a detailed working process of the foregoing system, apparatus, and unit, refer to a corresponding process in the foregoing method embodiments, and details are not described herein again. In the foregoing embodiments, the description of each embodiment has respective focuses. For a part that is not described in detail in an embodiment, refer to related descriptions in other embodiments.

## Claims

1. A data processing method, applied to a communication system, wherein the communication system comprises a first node, a second node, and a transport network, and the transport network is used to forward data between the first node and the second node; and the method comprises:
sequentially obtaining, by the transport network, a first work request WR and a second WR that are submitted by the first node, wherein the first WR and the second WR point to a first message and a second message respectively, the first message indicates to perform a first data transmission operation between the first node and the second node, the second message indicates to perform a second data transmission operation between the first node and the second node, the second WR carries a target sending identifier, and the target sending identifier indicates an order in which the transport network processes the first WR and the second WR; and
processing, by the transport network, the first WR and the second WR in the order indicated by the target sending identifier.

2. The method according to claim 1, wherein the processing, by the transport network, the first WR and the second WR in the order indicated by the target sending identifier comprises:
performing, by the transport network, the first data transmission operation and the second data transmission operation in a first order; and
reporting, by the transport network, a completion status of the first data transmission operation and a completion status of the second data transmission operation in a second order, wherein
the first order is the order indicated by the target sending identifier, and/or the second order is the order indicated by the target sending identifier.

3. The method according to claim 2, wherein the transport network comprises a first network interface card connected to the first node and a second network interface card connected to the second node, and the first order comprises a requester execution order and a responder execution order; and the performing, by the transport network, the first data transmission operation and the second data transmission operation in a first order comprises:
sending, by the first network interface card, a first packet and a second packet to the second network interface card in the requester execution order, wherein the first packet carries the first message, and the second packet carries the second message; and
performing, by the second network interface card, the first data transmission operation and the second data transmission operation in the responder execution order.

4. The method according to claim 3, wherein the requester execution order is the order indicated by the target sending identifier, and/or the responder execution order is an order indicated by a target receiving identifier encapsulated by the first network interface card into the second packet based on the target sending identifier.

5. The method according to claim 3 or 4, wherein the second order comprises a requester completion order and a responder completion order; and the reporting, by the transport network, a completion status of the first data transmission operation and a completion status of the second data transmission operation in a second order comprises:
reporting, by the second network interface card, the completion status of the first data transmission operation and the completion status of the second data transmission operation to the second node in the responder completion order; and
reporting, by the first network interface card, the completion status of the first data transmission operation and the completion status of the second data transmission operation to the first node in the requester completion order, wherein
the requester completion order is the order indicated by the target sending identifier, and/or the responder completion order is the order indicated by the target receiving identifier encapsulated by the first network interface card into the second packet based on the target sending identifier.

6. A data processing method, applied to a communication system, wherein the communication system comprises a first node, a second node, and a transport network, and the transport network is used to forward data between the first node and the second node; and the method comprises:
sequentially submitting, by the first node, a first work request WR and a second WR to the transport network, wherein the first WR and the second WR point to a first message and a second message respectively, the first message indicates to perform a first data transmission operation between the first node and the second node, the second message indicates to perform a second data transmission operation between the first node and the second node, the second WR carries a target sending identifier, and the target sending identifier indicates an order in which the transport network processes the first WR and the second WR.

7. A data processing method, applied to a communication system, wherein the communication system comprises a first node, a second node, and a transport network, and the transport network is used to forward data between the first node and the second node; and the method comprises:
sequentially submitting, by the first node, a first work request WR and a second WR to the transport network, wherein the first WR and the second WR point to a first message and a second message respectively, the first message indicates to perform a first data transmission operation between the first node and the second node, the second message indicates to perform a second data transmission operation between the first node and the second node, the second WR carries a target sending identifier, and the target sending identifier indicates an order in which the transport network processes the first WR and the second WR; and
processing, by the transport network, the first WR and the second WR in the order indicated by the target sending identifier.

8. A data processing method, applied to a communication system, wherein the communication system comprises a first node, a second node, and a transport network, the transport network is used to forward data between the first node and the second node, and the transport network comprises a first network interface card and a second network interface card; and the method comprises:
sequentially obtaining, by the first network interface card, a first work request WR and a second WR that are submitted by the first node, wherein the first WR and the second WR point to a first message and a second message respectively, the first message indicates to perform a first data transmission operation between the first node and the second node, the second message indicates to perform a second data transmission operation between the first node and the second node, the second WR carries a target sending identifier, and the target sending identifier indicates an order in which the transport network processes the first WR and the second WR; and
processing, by the first network interface card, the first WR and the second WR in the order indicated by the target sending identifier.

9. A data processing method, applied to a communication system, wherein the communication system comprises a first node, a second node, and a transport network, the transport network is used to forward data between the first node and the second node, and the transport network comprises a first network interface card and a second network interface card; and the method comprises:
separately receiving, by the second network interface card, a first packet and a second packet that are sent by the first network interface card, wherein the first packet carries a first message to which a first work request WR points, the second packet carries a second message to which a second WR points, the first WR and the second WR are sequentially submitted by the first node, the first message indicates to perform a first data transmission operation between the first node and the second node, the second message indicates to perform a second data transmission operation between the first node and the second node, the second packet carries a target receiving identifier, and the target receiving identifier indicates an order in which the transport network processes the first WR and the second WR; and
processing, by the second network interface card, the first message and the second message in the order indicated by the target receiving identifier.

10. A data processing apparatus, comprising: an obtaining module, configured to sequentially obtain a first work request WR and a second WR that are submitted by a first node, wherein the first WR and the second WR point to a first message and a second message respectively, the first message indicates to perform a first data transmission operation between the first node and a second node, the second message indicates to perform a second data transmission operation between the first node and the second node, the second WR carries a target sending identifier, and the target sending identifier indicates an order in which the transport network processes the first WR and the second WR; and
a processing module, configured to process the first WR and the second WR in the order indicated by the target sending identifier.

11. A data processing apparatus, comprising:
an interaction module, configured to sequentially submit a first work request WR and a second WR to a transport network, wherein the first WR and the second WR point to a first message and a second message respectively, the first message indicates to perform a first data transmission operation between the data processing apparatus and a second node, the second message indicates to perform a second data transmission operation between the data processing apparatus and the second node, the second WR carries a target sending identifier, and the target sending identifier indicates an order in which the transport network processes the first WR and the second WR.

12. A communication system, comprising the data processing apparatus according to claim 10 and the data processing apparatus according to claim 11.

13. A computing device, comprising a memory and a processor, wherein the memory stores code, the processor is configured to execute the code, and when the code is executed, the computing device performs the method according to any one of claims 1 to 9.

14. A computer storage medium, wherein the computer storage medium stores a computer program, and when the program is executed by a computer, the computer is enabled to implement the method according to any one of claims 1 to 9.
